# EUROPEAN PATENT APPLICATION

(11) **EP 4 635 357 A1**
(43) Date of publication of application: **22.10.2025**
(21) Application number: 23901920.1
(22) Date of filing: 01.03.2023
(51) Int. Cl.: A43C 11/14

(54) **ROPE ROTARY BUCKLE, SHOE, AND ARTICLE**

(30) Priority: 14.12.2022 CN 202211610415
(71) Applicant: Quanzhou BXO Technology Co., Ltd., Quanzhou, Fujian 362000 (CN)
(72) Inventor: HONG, Jianhong, Quanzhou, Fujian 362000 (CN); FU, Yayu, Quanzhou, Fujian 362000 (CN); WANG, Liting, Quanzhou, Fujian 362000 (CN)
(74) Representative: Ipey
(86) International application number: PCT/CN2023/079079
(87) International publication number: WO 2024/124702

(57) **Abstract**

A rope rotary buckle, comprising: a base; a rotary cap and a rope winding shaft arranged in the base, wherein the base comprises a base body comprising a seat surrounding wall (11), the rotary cap comprises a cover body (2), and the rope winding shaft comprises a shaft body; a clamping claw (12) arranged on the seat surrounding wall (11), wherein the clamping claw (12) is integrally formed on the seat surrounding wall (11) in an area above a lower end thereof; the clamping claw (12) comprises a resilience claw arm (121) extending in a direction around an axis of the rope winding shaft, and claw teeth (122) formed on the resilience claw arm (121) and facing an outer circle, the resilience claw arm (121) being a curved arc that arches outwards, and the toroidal surface where the resilience claw arm (121) is arranged being closer to the axis of the rope winding shaft than the toroidal surface where the seat surrounding wall (11) is arranged; the cover body (2) comprises a tooth wall ring (21) extending towards the base and corresponding to the clamping claw (12), the toroidal surface where the tooth wall ring (21) is arranged being closer to the axis of the rope winding shaft than the toroidal surface where the seat surrounding wall (11) is arranged; cover teeth (211) facing the clamping claw (12) are formed on the inner circle side of the tooth wall ring (21); and the shaft body comprises a rope winding body (31) located at the inner circle of the seat surrounding wall (11) and correspondingly located below the clamping claw (12), and an upper shaft portion (32) correspondingly extending into the inner circle of the clamping claw (12), the toroidal surface where the maximum outer diameter of the rope winding body (31) and the upper shaft portion (32) is arranged being closer to the axis of the rope winding shaft than the toroidal surface where the seat surrounding wall (11) is arranged. Further disclosed are a shoe and an article.

## Description

### TECHNICAL FIELD

The present application relates to the field of daily life, and specifically to a rope rotary buckle, shoe, and article.

### BACKGROUND

The openings of items such as shoes, clothing, backpacks, hats, and protective gear are typically equipped with ropes or similar drawstrings for tightening or loosening. At present, people generally secure the tightness of the rope by tying knots, which is cumbersome, inconvenient, prone to loosening, and lacks simplicity and aesthetic appeal.

To address the aforementioned issues, Chinese application patent CN201820751299.8 discloses a lacing system based on a rotor and stator, comprising a rotor and a stator, characterized in that the stator comprises a stator main body and an expansion bracket. The stator main body, rotor, and expansion bracket are sequentially fitted and connected. The rotor is provided with a winding groove and threading hole along the circumferential direction. Teeth are provided on either the rotor or the stator main body, and corresponding claws are provided on the stator main body or rotor for cooperative engagement. The stator is provided with a gear position structure, and the claws and teeth engage or disengage through the gear position structure. The stator main body and the expansion bracket are fixedly connected by screws or a buckle structure. The gear position structure is either a fixed gear position or a resilience gear position. The fixed gear position comprises a gear position protrusion and a correspondingly arranged retaining ring. The resilience gear position comprises a resilience leg and a retaining ring. The resilience leg comprises a root and a resilience body, with at least one limiting groove formed on the outer surface of the resilience body for restricting the retaining ring. The expansion bracket is provided with a module cavity, which is configured to accommodate functional modules and a power supply. The mating connection surface of the rotor is provided with teeth, and the corresponding mating connection surface of the stator main body is provided with a claw. The mating connection surface of the stator main body is provided with teeth, and the corresponding mating connection surface of the rotor is provided with a claw. The lacing system further comprises a cover, which is connected to the rotor by means of a buckle structure. The cover comprises an accommodating cavity, which comprises a first inner cavity and a second inner cavity arranged in a stepped configuration. The first inner cavity is configured to accommodate the module cavity portion of the expansion bracket. An annular groove is formed on the inner wall of the first inner cavity near the step, and the annular groove is provided with buckle structures evenly spaced in the circumferential direction for engagement with the rotor. A lacing system based on a rotor and stator, comprising a rotor and a stator, wherein the stator comprises only a stator main body, and the rotor comprises, in sequence from top to bottom, a top cover, a ratchet, and a winding groove. The stator main body is provided with teeth, and the rotor is correspondingly provided with a claw. The stator main body is provided with a resilience stop pin, and the engagement or disengagement between the teeth and the claw is achieved via the resilience stop pin.

The present application, by utilizing a rotary cap to wind and unwind the rope rotary buckle, addresses the problem of manually tying shoelaces to a certain extent. However, its structure is complex and loose, the manufacturing and assembly processes are cumbersome, the cost is high, the strength is insufficient, and its operational stability and smoothness remain inadequate. Furthermore, most of its components require multiple sets of complex molds for demolding, resulting in high costs and low efficiency. In particular, there is a loose gap between the rotary cap and the seat sidewall, making it easy for fine debris such as dust and sand to enter the interior, thereby affecting the operational stability and service life of the internal components. For example, debris may jam or obstruct the engagement areas of the teeth and the action gaps, causing malfunction or even damage.

In view of the foregoing, the inventor of the present application conducted in-depth research on the above issues, resulting in the present application.

### SUMMARY

One objective of the present application is to provide a rope rotary buckle that is easy to demold, simple to process and assemble, low in cost, firm and compact, dustproof and sandproof, and exhibits durable, stable, and smooth operational performance.

Another objective of the present application is to provide a shoe using the rope rotary buckle and achieving the aforementioned effects.

A further objective of the present application is to provide an article using the rope rotary buckle and achieving the aforementioned effects.

To achieve the above objectives, the present application adopts the following technical solution:

A rope rotary buckle, comprising: a base; a rotary cap; and a rope winding shaft arranged within the base, wherein the base comprises a base body, the base body comprising a seat surrounding wall, the rotary cap comprises a cover body, the rope winding shaft comprises a shaft body, a direction toward the rotary cap is defined as an upper side, and an opposite direction as a lower side, wherein the rope rotary buckle further comprises clamping claws arranged on the seat surrounding wall, the clamping claw being integrally formed in the region above the lower end of the seat surrounding wall, the clamping claw comprises a resilience claw arm extending in the direction surrounding the axis of the rope winding shaft, and a claw tooth formed on the resilience claw arm and oriented toward an outer circle, the resilience claw arm is outwardly arched in a curved arc shape, and a toroidal surface on which the resilience claw arm is arranged is closer to the axis of the rope winding shaft than a toroidal surface on which the seat surrounding wall is arranged, the cover body comprises a tooth wall ring extending toward the base and corresponding to the clamping claw, a toroidal surface on which the tooth wall ring is arranged is closer to the axis of the rope winding shaft than the toroidal surface on which the seat surrounding wall is arranged, and an inner circle side of the tooth wall ring is formed with cover teeth facing the clamping claw, the shaft body comprises a rope winding body positioned within the inner circle of the seat surrounding wall and corresponding to a position below the clamping claw, and an upper shaft portion extending into the inner circle of the clamping claw, the toroidal surface at the maximum outer diameter of the rope winding body and the upper shaft portion is closer to the axis of the rope winding shaft than the toroidal surface on which the seat surrounding wall is arranged.

The toroidal surface on which the resilience claw arm is arranged is at the inner circle of the toroidal surface on which the seat surrounding wall is arranged.

A projection of the resilience claw arm on a plane perpendicular to the axis of the rope winding shaft is within the inner circle of a projection of the seat surrounding wall on a plane perpendicular to the axis of the rope winding shaft.

An accommodating space for the rope winding shaft is provided between the clamping claw and the lower end of the seat surrounding wall.

The clamping claw is formed at an upper portion of the seat surrounding wall.

Two or more clamping claws are arranged around the axis of the rope winding shaft, with their free ends oriented in the same direction.

Two, three, or four clamping claws are evenly arranged around the axis of the rope winding shaft.

The claw tooth is formed on at least one of an outer circle side and an end portion of the resilience claw arm.

A claw gap is provided between the resilience claw arm and the inner side of the seat surrounding wall.

The claw gap has a size for the tooth wall ring and cover teeth of the rotary cap to insert therein.

Each claw gap forms a bottom ring groove for the tooth wall ring and cover teeth of the rotary cap to insert into and rotate a full circle.

The width of the claw gap is greater than the sum of the thickness of the tooth wall ring of the rotary cap and the tooth height of the cover tooth.

The resilience claw arm comprises a claw free end capable of swinging inwardly and outwardly, and a claw root connected to the inner side of the seat surrounding wall.

The claw root is connected to the inner side of the seat surrounding wall via the root connecting portion.

The root connecting portion is connected to a lower part of the resilience claw arm.

The claw tooth is at least partially higher than the root connecting portion.

The claw tooth is entirely higher than the root connecting portion.

The resilience claw arm is at least partially higher than the root connecting portion.

The resilience claw arm is entirely higher than the root connecting portion.

At least one of the claw root and the root connecting portion has a root protrusion extending toward the inner circle.

The height of the root protrusion extending toward the inner circle is greater than or equal to the tooth height of the claw tooth.

The root protrusion of each clamping claw forms a radial limiting space for the upper shaft portion of the rope winding shaft to extend into.

A distance from the resilience claw arm to the upper shaft portion of the rope winding shaft is greater than or equal to the tooth height of the claw tooth.

The root connecting portion gradually widens from the claw root to the inner side of the seat surrounding wall.

Limiting protrusions are formed on the inner side of the seat surrounding wall.

The limiting protrusion corresponds to the resilience claw arm.

An upper surface of the limiting protrusion is flush with an upper surface of the root connecting portion.

A lower surface of the limiting protrusion is flush with a lower surface of the root connecting portion.

The limiting protrusion extends along the axis surrounding the rope winding shaft.

The limiting protrusion is lower than at least one of the upper surfaces of the resilience claw arm and the claw tooth.

The limiting protrusion is lower than at least one of the resilience claw arm and the claw tooth.

A formed through opening is provided between the limiting protrusion and the adjacent root connecting portion.

The formed through opening vertically corresponds to at least one of a wall clamping portion and the claw tooth.

A wall clamping portion for clamping the rope winding shaft is formed at a lower part of the seat surrounding wall.

The wall clamping portion is a step protruding in the direction of the axis of the rope winding shaft.

An axial limiting space for restricting the rope winding shaft in the vertical direction is formed between the wall clamping portion and the root connecting portion.

An inclined surface for the rope winding shaft to be clamped in is formed at a lower part of the wall clamping portion
The seat surrounding wall is provided with a resilience bearing arm capable of swinging inwardly and outwardly, and the wall clamping portion is formed on the inner side of the resilience bearing arm.

A gap is formed between the resilience bearing arm and the main body of the seat surrounding wall.

The upper end of the seat surrounding wall is provided with an upper extending wall that is higher than the root connecting portion.

The upper extending wall is higher than the resilience claw arm.

The upper extending wall comprises a wall insertion section that extends into the cover ring groove.

The maximum depth of the wall insertion section extending into the cover ring groove is greater than the distance required to pull out the rotary cap when releasing the rope.

The resilience claw arm is provided with a downwardly extending arm protrusion.

The arm protrusion is formed on the lower surface of the resilience claw arm and extends toward the rope winding body of the rope winding shaft.

A lower end of the arm protrusion is higher than, or flush with, a lower surface of the root connecting portion.

The protrusion height of the arm protrusion is less than or equal to the thickness of the root connecting portion or the limiting protrusion.

The arm protrusion is formed at at least one location between the two ends of the resilience claw arm and the claw free end.

The distance from the arm protrusion to the upper shaft portion of the rope winding shaft is greater than or equal to the tooth height of the claw teeth.

The distances from each point on the outer circle side of the resilience claw arm to the seat surrounding wall are equal, or gradually approach the seat surrounding wall from the claw root to the claw free end.

The distance from the resilience claw arm to the seat surrounding wall is equal, or gradually approach the seat surrounding wall from the claw root to the claw free end.

The claw teeth are formed on the outer circle side of the claw free end.

A tooth wall gap is provided between the claw teeth and the inner side of the seat surrounding wall.

The resilience claw arm extends gradually from the claw root to the claw free end in a rope tightening direction.

The claw tooth comprises a tooth root and a tooth tip, and the claw tooth is gradually inclined from the tooth root to the tooth tip in the rope tightening direction.

The claw tooth comprises a tooth root and a tooth tip, and the claw tooth comprises a tooth clamping surface oriented toward the rope tightening direction and a tooth trailing surface oriented toward a rope releasing direction, the tooth trailing surface being gradually inclined toward the rope tightening direction from the tooth root to the tooth tip.

The plane on which the tooth clamping surface is located passes through the axis of the rope winding shaft or is gradually inclined toward the rope tightening direction from the tooth root to the tooth tip

More than two claw teeth are provided on the outer circle side of the same resilience claw arm.

The seat surrounding wall comprises a seat extension wall extending into the accommodating space of a connection seat, and a rope-passing portion corresponding to a corresponding wall of the connection seat.

The seat surrounding wall is formed with a rope-through portion opposite the rope-passing portion.

The rope-passing portion and the rope-through portion correspond to each other and are arranged on both sides of the rope winding shaft.

The rope-through portion comprises a rope-through hole formed in a side wall of the rope rotary buckle.

The rope-through hole has a size for a clamping head of the rope rotary buckle to pass through.

A convex ring is formed on the outer circumferential surface of the seat surrounding wall.

The convex ring is at least as high as either the rope-through portion or the rope-passing portion.

The rope-through portion is formed on the convex ring.

At least one of the upper surface or lower surface of the convex ring is planar.

The convex ring is formed with a ring notch corresponding to the rope-through portion.

The extent to which the tooth wall ring extends into the bottom ring groove of the base is less than the distance required to pull out the rotary cap when releasing the rope.

The cover body comprises a cover top wall and a cover side wall.

The toroidal surface on which the tooth wall ring is arranged is at the inner circle of the toroidal surface on which the seat surrounding wall is arranged, and the tooth wall ring is formed on the inner side surface of the cover top wall.

The distance from the cover tooth root to the axis of the rope winding shaft is less than or equal to the distance from the claw tooth tip to the axis of the rope winding shaft.

A cover gap is provided between the tooth wall ring and the cover side wall.

A cover ring groove for limiting insertion of the wall insertion section is formed between the tooth wall ring and the cover side wall.

The depth of the cover ring groove is greater than the distance required to pull out the rotary cap when releasing the rope.

The cover ring groove comprises an inner circle groove wall corresponding to the inner circle side of the wall insertion section, and an outer circle groove wall corresponding to the outer circle side of the wall insertion section, the inner circle groove wall is parallel to the inner circle side of the wall insertion section, and the outer circle groove wall is parallel to the outer circle side of the wall insertion section.

The outer circle groove wall extends to the lower end of the cover side wall.

A cover rotation shaft extending downward into an axial hole of the rope winding shaft is provided at a rotation axis of the cover top wall.

The cover rotation shaft comprises an upper rotation shaft body and a lower limiting ring.

The limiting ring comprises an upper limiting ring positioned above and a lower limiting ring positioned below.

The diameter of the upper limiting ring is less than that of the lower limiting ring.

The diameter of the upper limiting ring is less than that of the rotation shaft body.

The diameter of the lower limiting ring is less than or equal to that of the rotation shaft body.

An upper neck portion is formed between the upper limiting ring and the cover rotation shaft.

A lower neck portion is formed between the lower limiting ring and the upper limiting ring.

The edge of the upper limiting ring is provided with an overrunning inclined surface along which the arm clamping block of the rope winding shaft slides.

The lower limiting ring is provided with a ring anti-detachment clamping surface facing upward to clamping the arm clamping block.

The ring anti-detachment clamping surface is a plane perpendicular to the axis of the cover rotation shaft.

A lower end of the lower limiting ring is provided with a downward-facing annular inclined surface, which gradually inclines toward the axis of the cover rotation shaft from top to bottom.

Both the upper limiting ring and the lower limiting ring are complete rings.

A rotation shaft hole is formed within the cover rotation shaft.

The rotation shaft hole is formed at the lower end of the cover rotation shaft, and its length is less than or equal to the length of the cover rotation shaft.

The cover body is provided with a driving portion for driving the rope winding shaft to rotate.

The driving portion is a driving tooth formed on at least one of the cover top wall and the cover rotation shaft.

The driving teeth comprise a plurality of tooth units evenly arranged around the cover rotation shaft.

Each tooth unit has a driving tooth surface facing the rope tightening direction and a driving tooth reverse surface facing the rope releasing direction; the driving tooth reverse surface is an inclined surface that gradually inclines from top to bottom toward the rope tightening direction.

The driving tooth surface extends from top to bottom along the axis of the rope winding shaft or is an inclined surface that gradually inclines from top to bottom in the rope tightening direction.

The driving tooth is positioned within the inner circle of the cover tooth, and an accommodating gap for accommodating the clamping claw is provided between the driving teeth and the cover teeth.

The distance between the driving tooth and the cover tooth is greater than the sum of the radial thickness of the resilience claw arm and the tooth height of the claw tooth.

The driving tooth is formed on the inner surface of the cover top wall and a rotation shaft gap is provided between the driving tooth and the cover rotation shaft.

The rotation shaft gap is dimensioned to accommodate an upper shaft inner wall of the rope winding shaft.

An annular protrusion corresponding to the cover ring groove is formed at the edge of the upper surface of the cover top wall.

The cover body, tooth wall ring, cover teeth, cover rotation shaft, and driving portion are integrally injection molded.

The rope winding body comprises a shaft upper wall disposed below the clamping claw, a shaft lower wall disposed below the shaft upper wall, and a rope winding main body connected between the shaft upper wall and the shaft lower wall; the diameter of the rope winding main body is less than the diameters of the shaft upper wall and the shaft lower wall.

An edge of the shaft upper wall is formed with a wall notch for passage of the wall clamping portion.

The upper shaft portion comprises a driven portion corresponding to the driving portion and configured to be driven.

The driven portion is a driven teeth corresponding to the driving teeth.

The driven tooth comprises a plurality of tooth units uniformly arranged around the axis of the rope winding shaft.

The tooth unit has a driven surface facing the rope releasing direction and a driven reverse surface facing the rope tightening direction; the driven reverse surface is an inclined surface that gradually inclines from top to bottom toward the rope tightening direction.

The driven surface extends from top to bottom along the axis of the rope winding shaft or is an inclined surface that gradually inclines toward the rope tightening direction from top to bottom.

The upper shaft portion comprises an upper shaft outer wall located at the outer circle of the driven tooth and corresponding to the clamping claw.

The upper shaft portion comprises an upper shaft inner wall located at the inner circle of driven teeth and corresponding to the cover rotation shaft.

The shaft body is formed with a shaft hole for the cover rotation shaft to extend into.

The shaft hole penetrates the shaft body along the axis of the shaft body from top to bottom.

The upper or lower part of the shaft hole is a circular hole for radial limiting, configured to cooperate with the circumferential surface of the cover rotation shaft.

It further comprises a resilience clamping portion disposed at the shaft hole and cooperating with the cover rotation shaft.

The resilience clamping portion comprises a resilience clamping arm disposed on the shaft hole wall, and an arm clamping block disposed at the free end of the resilience clamping arm and configured to cooperate with the limiting ring.

The arm clamping block protrudes into the region of the shaft hole.

The edge of the arm clamping block is provided with an overrunning inclined surface along which the upper limiting ring slides.

The arm clamping block is provided with an arm anti-detachment clamping surface facing downward and configured to be clamped by the ring anti-detachment clamping surface.

The arm anti-detachment clamping surface is a plane perpendicular to the axis of the cover rotation shaft, or is inclined downward from the outer circle to the inner circle.

The resilience clamping arm comprises an arm root connected to the shaft hole wall and an arm free end bearing the arm clamping block; the resilience clamping arm extends gradually downward from the arm root to the arm free end.

The cross-sectional area of the resilience clamping arm increases gradually from bottom to top.

The resilience clamping arm comprises an arm inner side surface facing the shaft hole, an arm outer side surface facing in an opposite direction, and two arm side surfaces disposed between the arm inner side surface and the arm outer side surface.

The distance between the arm inner side surface and the arm outer side surface gradually increases from bottom to top.

The distance between both arm side surfaces gradually increases from bottom to top.

The arm inner side surface and the inner wall of the shaft hole are located on the same circular pivot surface or are gradually inclined toward the axis of the shaft hole from top to bottom.

The arm outer side surface is parallel to the axis of the shaft hole or is gradually inclined toward the axis of the shaft hole from top to bottom.

The cross-section of the resilience clamping arm is an arc shape surrounding the axis of the shaft hole.

At least one of the lower end face of the resilience clamping arm and the arm anti-detachment clamping surface is provided with a toggle portion for toggling.

The toggle portion is a protrusion or a groove.

The toggle portion is a bar-shaped protrusion disposed between both arm side surfaces and extending toward both arm side surfaces.

The shaft body is formed with an annular gap surrounding the resilience clamping arm.

The annular gap is of uniform width from top to bottom or gradually increases in width.

The annular gap comprises a back gap corresponding to the arm outer side surface and side gap corresponding to both arm side surfaces.

At least the width of the lower end of the back gap is greater than the buckling depth of the upper limiting ring and the arm clamping block.

At least the width of the lower end of the back gap is greater than the buckling depth of the lower limiting ring and the arm clamping block.

At least one of the outer surfaces of the back gap and the side gap is inclined outward from top to bottom.

More than two resilience clamping portions are disposed around the axis of the shaft hole.

Two or three resilience clamping portions are evenly disposed around the axis of the shaft hole.

The distance between the ends of the arm clamping blocks of each resilience clamping portion is less than the outer diameter of the lower limiting ring.

The distance between the ends of the arm clamping blocks of each resilience clamping portion is less than the outer diameter of the upper limiting ring.

The end of the arm clamping block is an arc shape and is configured to mate with at least one of the upper neck portion and the lower neck portion.

The resilience clamping portion and the shaft body are integrally injection molded.

The base comprises clamping claws, the clamping claw having claw teeth; the rotary cap has driving teeth and cover teeth configured to mate with the claw teeth; and the rope winding shaft has driven teeth configured to be driven by the driving teeth, the overlapping region between the claw teeth and the cover teeth in the vertical direction is less than the distance required to pull out the rotary cap when releasing the rope, the overlapping region between the driving teeth and the driven teeth in the vertical direction is less than the distance required to pull out the rotary cap when releasing the rope.

The base comprises clamping claws, the clamping claw having claw teeth; the rotary cap has driving teeth and cover teeth configured to mate with the claw teeth, the cover tooth is provided with a tooth surface that engages and locks with the tooth clamping surface of the claw tooth, and a tooth trailing surface that is matched with the tooth trailing surface of the claw tooth.

The tooth trailing surface inclines gradually from the root to the tip of the cover tooth in the rope releasing direction.

The plane on which the tooth clamping surface is arranged passes through the axis of the rope winding shaft or inclines gradually from the tooth root to the tooth tip in the rope tightening direction.

A shoe, comprising a shoe main body and a rope rotary buckle assembled on the shoe main body.

An article, comprising an article main body and a rope rotary buckle assembled on the article main body.

By adopting the above technical solution, the rope rotary buckle of the present application overcomes the structural limitations of traditional rope rotary buckles. During actual use, the rotary cap, base, and rope winding shaft cooperate with one another. The various structures of the rotary cap can be directly molded by vertical demolding. The clamping claw is positioned above the rope winding body of the rope winding shaft to provide axial limiting for the rope winding shaft, while the clamping claw provides radial limiting for the upper shaft portion of the rope winding shaft located within the inner circle. The tooth wall ring of the rotary cap extends to the outside of the clamping claw of the base, enabling the cover teeth and claw teeth to correspondingly engage. The driving portion of the rotary cap cooperates with the driven portion of the rope winding shaft. When the user rotates the rotary cap in the rope tightening direction, the driving portion actuates the driven portion, thereby causing the rope winding shaft to wind and tighten the rope rotary buckle. The cover teeth slide over the claw teeth accordingly and is positioned by the claw teeth at the corresponding location, preventing the rotary cap from reversing and thus preventing the rope winding shaft from reversing. This ensures that the rope winding shaft tightens the rope rotary buckle and maintains it in the desired position. The rope winding shaft is simultaneously axially and radially limited by the clamping claw, resulting in stable and smooth rotation of the rope winding shaft, which is not prone to wobbling. The resilience claw arm and the seat surrounding wall are staggered on the toroidal surface, facilitating upper and lower demolding processes. Furthermore, the resilience claw arm, which is positioned more inward than the seat surrounding wall and is integrally formed, can directly provide more secure axial limiting for the rope winding shaft. At the same time, the outward-facing claw teeth and the inward-facing cover teeth can directly engage above the rope winding shaft, allowing the cover teeth and the cover side wall to retract further inward. The cover side wall can operate in close proximity to the seat surrounding wall, resulting in a compact and stable structure while preventing foreign matter from entering and affecting the operation of the internal mechanism. Meanwhile, the outer side of the outwardly arched, curved arc-shaped resilience claw arm is reinforced by abutment, ensuring the compressive strength of the resilience claw arm. Additionally, the rope winding shaft and the rotary cap provide axial limiting for the clamping claw from above and below, preventing the clamping claw from bending or breaking upward or downward under force, thereby ensuring durable, stable, and smooth operation of the mechanism. By axially pulling out the rotary cap to disengage the cover teeth from the claw teeth, or to disengage the driving portion from the driven portion, the rotational restriction on the rope winding shaft can be released, thereby achieving anti-loosening of the rope rotary buckle. Compared with the prior art, the rope rotary buckle of the present application offers advantages such as easy demolding, simple processing and assembly procedures, low cost, firm and compact structure, dustproof and sandproof properties, and durable, stable, and smooth operational performance.

The shoe of the present application breaks through the conventional shoelace winding and unwinding structure. During actual use, the rotary cap, base, and rope winding shaft of the rope rotary buckle cooperate with each other. The various structures of the rotary cap can be directly molded by vertical demolding. The clamping claw is positioned above the rope winding body of the rope winding shaft to provide axial limiting for the rope winding shaft. The clamping claw provides radial limiting for the upper shaft portion of the rope winding shaft located within the inner circle. The tooth wall ring of the rotary cap extends to the outside of the clamping claw of the base, allowing the cover teeth and the claw teeth to correspond and engage, and the driving portion of the rotary cap to cooperate with the driven portion of the rope winding shaft. When the user rotates the rotary cap in the rope tightening direction, the driving portion actuates the driven portion, thereby causing the rope winding shaft to wind and tighten the rope rotary buckle. The cover teeth slide over the claw teeth accordingly and is positioned by the claw teeth at the corresponding location, preventing the rotary cap from reversing and thus preventing the rope winding shaft from reversing. This ensures that the rope winding shaft tightens the rope rotary buckle and maintains it in the desired position. The rope winding shaft is simultaneously axially and radially limited by the clamping claw, resulting in stable and smooth rotation of the rope winding shaft, which is not prone to wobbling. The resilience claw arm and the seat surrounding wall are staggered on the toroidal surface, facilitating upper and lower demolding processes. Furthermore, the resilience claw arm, which is positioned more inward than the seat surrounding wall and is integrally formed, can directly provide more secure axial limiting for the rope winding shaft. At the same time, the outward-facing claw teeth and the inward-facing cover teeth can directly engage above the rope winding shaft, allowing the cover teeth and the cover side wall to retract further inward. The cover side wall can operate in close proximity to the seat surrounding wall, resulting in a compact and stable structure while preventing foreign matter from entering and affecting the operation of the internal mechanism. Meanwhile, the outer side of the outwardly arched, curved arc-shaped resilience claw arm is reinforced by abutment, ensuring the compressive strength of the resilience claw arm. Additionally, the rope winding shaft and the rotary cap provide axial limiting for the clamping claw from above and below, preventing the clamping claw from bending or breaking upward or downward under force, thereby ensuring durable, stable, and smooth operation of the mechanism. By axially pulling out the rotary cap to disengage the cover teeth from the claw teeth, or to disengage the driving portion from the driven portion, the rotational restriction on the rope winding shaft can be released, thereby achieving anti-loosening of the rope rotary buckle. Compared with the prior art, the shoe of the present application features a rope rotary buckle that offers advantages such as easy demolding, simple processing and assembly procedures, low cost, firm and compact structure, dustproof and sandproof properties, and long-lasting, stable, and smooth operational performance.

An article according to the present application overcomes the conventional rope winding and unwinding structure of traditional articles. During actual use, the rotary cap, base, and rope winding shaft of the rope rotary buckle cooperate with one another. The various structures of the rotary cap can be directly molded and demolded vertically. The clamping claw is positioned above the rope winding body of the rope winding shaft to provide axial limiting for the rope winding shaft. The clamping claw provides radial limiting for the upper shaft portion of the rope winding shaft located within the inner circle. The tooth wall ring of the rotary cap extends into the outer side of the clamping claw of the base, allowing the cover teeth and claw teeth to correspond and engage. The driving portion of the rotary cap cooperates with the driven portion of the rope winding shaft. When the user rotates the rotary cap in the rope tightening direction, the driving portion actuates the driven portion, thereby causing the rope winding shaft to wind and tighten the rope rotary buckle. The cover teeth slide over the claw teeth accordingly and is positioned by the claw teeth at the corresponding location, preventing the rotary cap from reversing and thus preventing the rope winding shaft from reversing. This ensures that the rope winding shaft tightens the rope rotary buckle and maintains it in the desired position. The rope winding shaft is simultaneously axially and radially limited by the clamping claw, resulting in stable and smooth rotation of the rope winding shaft, which is not prone to wobbling. The resilience claw arm and the seat surrounding wall are staggered on the toroidal surface, facilitating upper and lower demolding processes. Furthermore, the resilience claw arm, which is positioned more inward than the seat surrounding wall and is integrally formed, can directly provide more secure axial limiting for the rope winding shaft. At the same time, the outward-facing claw teeth and the inward-facing cover teeth can directly engage above the rope winding shaft, allowing the cover teeth and the cover side wall to retract further inward. The cover side wall can operate in close proximity to the seat surrounding wall, resulting in a compact and stable structure while preventing foreign matter from entering and affecting the operation of the internal mechanism. Meanwhile, the outer side of the outwardly arched, curved arc-shaped resilience claw arm is reinforced by abutment, ensuring the compressive strength of the resilience claw arm. Additionally, the rope winding shaft and the rotary cap provide axial limiting for the clamping claw from above and below, preventing the clamping claw from bending or breaking upward or downward under force, thereby ensuring durable, stable, and smooth operation of the mechanism. By axially pulling out the rotary cap to disengage the cover teeth from the claw teeth, or to disengage the driving portion from the driven portion, the rotational restriction on the rope winding shaft can be released, thereby achieving anti-loosening of the rope rotary buckle. Compared with the prior art, the rope rotary buckle of the article of the present application offers advantages such as easy demolding, simple processing and assembly procedures, low cost, firm and compact structure, dustproof and sandproof properties, and durable, stable, and smooth operational performance.

### BRIEF DESCRIPTION OF THE DRAWINGS

Figure 1 is a perspective structural schematic diagram of the base;
Figure 2 is a top plan structural schematic diagram of the base;
Figure 3 is a side plan structural schematic diagram of the base;
Figure 4 is a bottom view structural schematic diagram of the base;
Figure 5 is a perspective structural schematic diagram of the base from another angle;
Figure 6 is a sectional structural schematic diagram of the base;
Figure 7 is a perspective structural schematic diagram of the rotary cap;
Figure 8 is a bottom plan structural schematic diagram of the rotary cap;
Figure 9 is a side plan structural schematic diagram of the rotary cap;
Figure 10 is a sectional structural schematic diagram of the rotary cap;
Figure 11 is a perspective structural schematic diagram of the rope winding shaft;
Figure 12 is a sectional structural schematic diagram of the rope winding shaft;
Figure 13 is a bottom plan structural schematic diagram of the rope winding shaft;
Figure 14 is a top plan structural schematic diagram of the rope winding shaft;
Figure 15 is a perspective structural schematic diagram of the rope rotary buckle;
Figure 16 is a sectional structural schematic diagram of the rope rotary buckle;
Figure 17 is a structural schematic diagram of the rope rotary buckle as applied to shoes and other items.

In the figure:
11-Seat surrounding wall; 111-Limiting protrusion; 1111-Formed through opening; 112-Wall clamping portion; 113-Resilience bearing arm; 114-Upper extending wall; 1141-Wall insertion section; 115-Seat extension wall; 116-Rope-passing portion; 117-Rope-through portion; 118-Convex ring; 1181-Ring notch; 12-Clamping claw; 121-Resilience claw arm; 1211-Arm protrusion; 122-Claw tooth; 1221-Tooth clamping surface; 1222-Tooth trailing surface; 123-Root connecting portion; 124-Root protrusion; 13-Claw gap; 14-Tooth wall gap
2-Cover body; 21-Tooth wall ring; 211-Cover tooth; 2111-Tooth surface; 2112-Trailing tooth surface; 22-Cover top wall; 23-Cover side wall; 24-Cover ring groove; 241-Inner circle groove wall; 242-Outer circle groove wall; 25-Cover rotation shaft; 251-Rotation shaft body; 252-Upper limiting ring; 253-Lower limiting ring; 2531-Ring anti-detachment clamping surface; 2532-Annular inclined surface; 254-Upper neck portion; 255-Lower neck portion; 256-Rotation shaft hole; 26-Driving tooth; 261-Tooth unit; 2611-Driving tooth surface; 2612-Driving tooth reverse surface; 27-Rotation shaft gap; 28-Annular protrusion
31 - Rope winding body; 311 - Upper shaft wall; 3111 - Wall notch; 312 - Lower shaft wall; 313 - Rope winding main body; 32 - Upper shaft portion; 321 - Driven tooth; 3211 - Tooth unit; 32111 - Driven surface; 32112 - Driven reverse surface; 322 - Upper shaft outer wall; 323 - Upper shaft inner wall; 33 - Shaft hole; 34 - Resilience clamping portion; 341 - Resilience clamping arm; 3411 - Arm inner side surface; 3412 - Arm outer side surface; 3413 - Arm side surface; 342 - Arm clamping block; 3421 - Arm anti-detachment clamping surface; 343 - Toggle portion; 35 - Annular gap; 351 - Back gap; 352 - Side gap
4 - Connection seat
5 - Shoe main body; 6 - Overrunning inclined surface.

### DETAILED DESCRIPTION

To further explain the technical solution of the present application, the following detailed description is provided through specific embodiments.

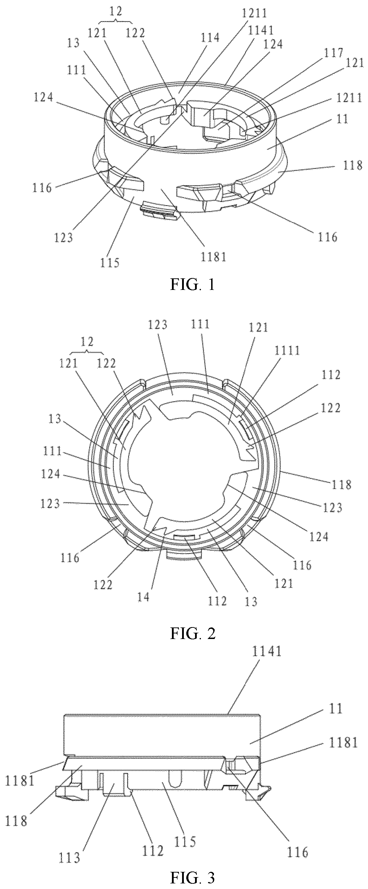

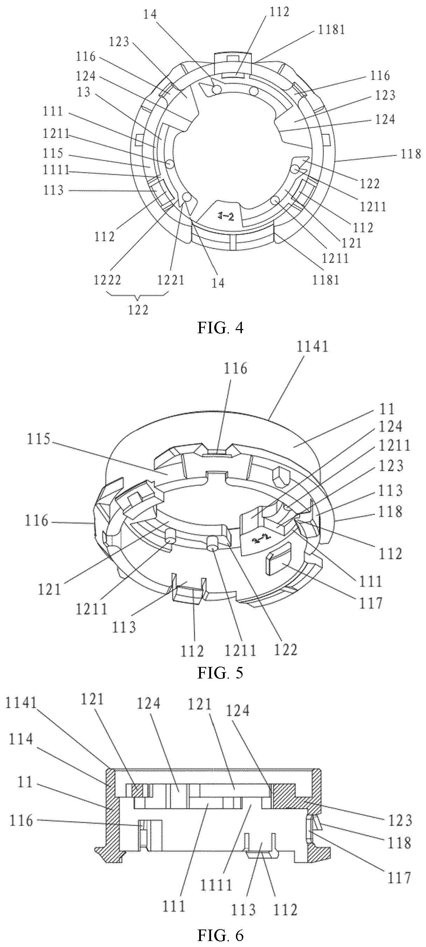

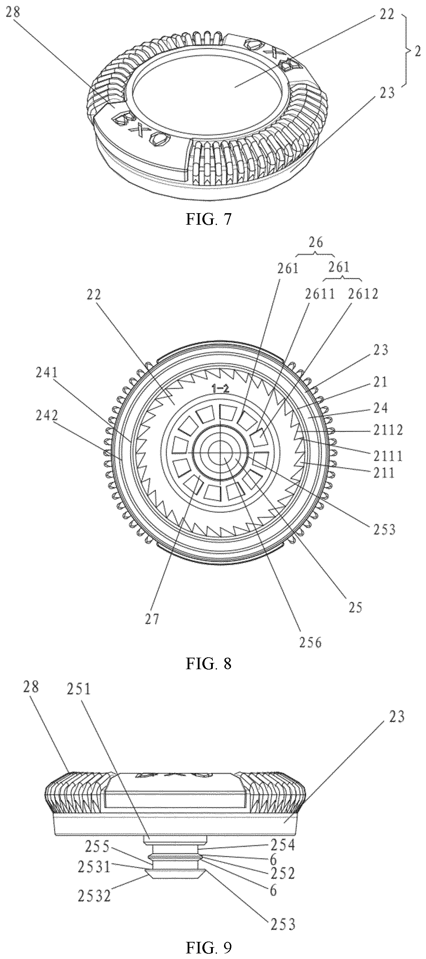

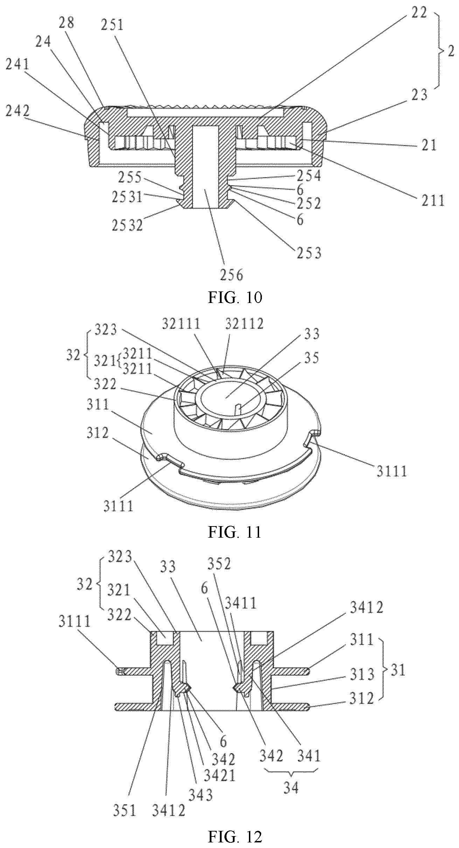

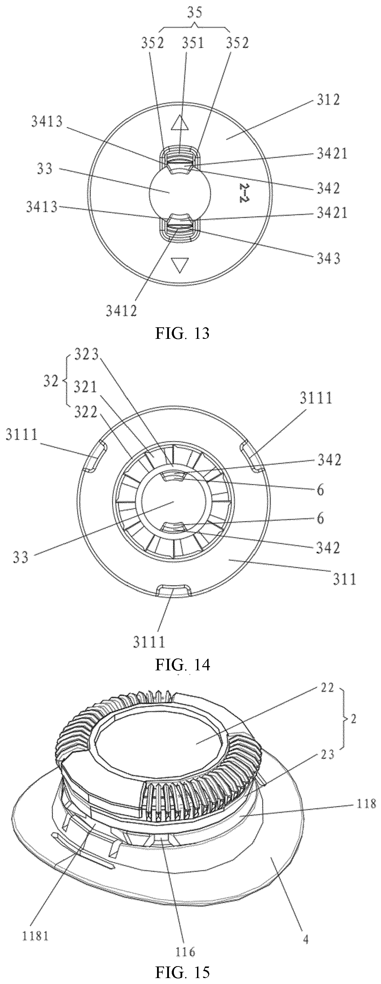

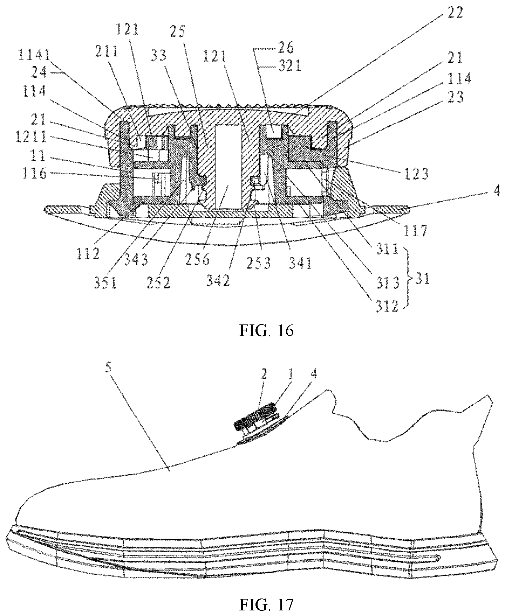

A rope rotary buckle according to the present application, as shown in Figures 1-17, comprises a base, a rotary cap, and a rope winding shaft arranged within the base. The base comprises a base body, which comprises a seat surrounding wall 11. The rotary cap comprises a cover body. The rope winding shaft comprises a shaft body. The direction toward the rotary cap is defined as the upper side, and the opposite direction as the lower side. It further comprises clamping claws 12 provided on the seat surrounding wall 11, the clamping claw 12 being integrally formed in the region above the lower end of the seat surrounding wall 11. The clamping claw 12 comprises a resilience claw arm 121 extending in the direction surrounding the axis of the rope winding shaft, and a claw tooth 122 formed on the resilience claw arm 121 and oriented toward the outer circle. The resilience claw arm 121 is outwardly arched in a curved arc shape, and a toroidal surface on which the resilience claw arm 121 is arranged is closer to the axis of the rope winding shaft than a toroidal surface on which the seat surrounding wall 11 is arranged. The cover body 2 comprises a tooth wall ring 21 extending toward the base and corresponding to the clamping claw 12. The toroidal surface on which the tooth wall ring 21 is arranged is closer to the axis of the rope winding shaft than the toroidal surface on which the seat surrounding wall 11 is arranged. The inner circle side of the tooth wall ring 21 is formed with a cover tooth 211 facing the clamping claw 12. The shaft body comprises a rope winding body 31 positioned within the inner circle of the seat surrounding wall 11 and corresponding to the area below the clamping claw 12, as well as an upper shaft portion 32 that extends into the inner circle of the clamping claw 12. The toroidal surface at the maximum outer diameter of the rope winding body 31 and the upper shaft portion 32 is closer to the axis of the rope winding shaft than the toroidal surface of the seat surrounding wall 11. During actual use, the base cooperates with the rotary cap and the rope winding shaft. The clamping claw 12 is positioned above the rope winding body 31 of the rope winding shaft to provide axial limiting for the rope winding shaft, while the clamping claw 12 provides radial limiting for the upper shaft portion 32 of the rope winding shaft located within the inner circle. The tooth wall ring 21 of the rotary cap extends to the outer side of the clamping claw 12 of the base, so that the cover teeth 211 corresponds to and engages with the claw teeth 122, and the driving portion of the rotary cap cooperates with the driven portion of the rope winding shaft. When the user rotates the rotary cap in the rope tightening direction, the driving portion drives the driven portion, causing the rope winding shaft to wind and tighten the rope. The cover teeth 211 slides over the claw teeth 122 accordingly and is positioned by the claw teeth 122 at the corresponding location, thereby preventing the rotary cap from reversing and further preventing the rope winding shaft from reversing. This ensures that the rope winding shaft tightens the rope and maintains it in the desired position. The rope winding shaft is simultaneously axially and radially limited by the clamping claw 12, ensuring stable and smooth rotation of the rope winding shaft, which is not prone to wobbling. The resilience claw arm 121 and the seat surrounding wall 11 are staggered on the toroidal surface, facilitating upper and lower demolding processes. Furthermore, the toroidal surface is positioned further inward than the seat surrounding wall 11, and the integrally formed resilience claw arm 121 can directly provide more secure axial limiting for the rope winding shaft. At the same time, the outward-facing claw teeth 122 and the inward-facing cover teeth 211 can directly cooperate above the rope winding shaft, allowing the cover teeth 211 and the cover side wall 23 to retract further inward. The cover side wall 23 can operate in close proximity to the seat surrounding wall 11, resulting in a compact and stable structure while preventing foreign matter from entering and affecting the operation of the internal mechanism. Additionally, the outer side of the outwardly arched, curved arc-shaped resilience claw arm 121 is reinforced, ensuring the compressive strength of the resilience claw arm 121. Furthermore, the rope winding shaft and the rotary cap axially limit the clamping claw 12 from above and below, preventing the clamping claw 12 from bending or breaking upward or downward due to force, thereby ensuring the mechanism operates durably, stably, and smoothly. By axially pulling out the rotary cap so that the cover teeth 211 disengage from the claw teeth 122, or so that the driving portion disengages from the driven portion, the rotational restriction on the rope winding shaft can be unlocked, thereby achieving anti-loosening of the rope rotary buckle.

In another embodiment, the toroidal surface on which the resilience claw arm 121 is arranged is positioned at the inner circle of the toroidal surface on which the seat surrounding wall 11 is arranged. This structure ensures that the toroidal surface on which the resilience claw arm 121 is arranged is offset from the toroidal surface on which the seat surrounding wall 11 is arranged, facilitating upper and lower demolding processes. Furthermore, with the toroidal surface positioned at the inner circle of the toroidal surface on which the seat surrounding wall 11 is arranged, the integrally formed resilience claw arm 121 can directly provide more secure axial limiting for the rope winding shaft. Simultaneously, the outward-facing claw teeth 122 and the inward-facing cover teeth 211 can directly engage above the rope winding shaft, allowing the cover teeth 211 and the cover side wall 23 to retract further inward. The cover side wall 23 can operate in close proximity to the seat surrounding wall 11, resulting in a compact and stable structure that prevents foreign objects from entering and affecting the operation of the internal mechanism. Additionally, the outer side of the outwardly arched, curved arc-shaped resilience claw arm 121 is reinforced by abutment, ensuring the compressive strength of the resilience claw arm 121.

In another embodiment, the projection of the resilience claw arm 121 on a plane perpendicular to the axis of the rope winding shaft is within the inner circle of a projection of the seat surrounding wall 11 on a plane perpendicular to the axis of the rope winding shaft. This structure ensures that the resilience claw arm 121 is positioned within the inner circle of the toroidal surface of the seat surrounding wall 11, with the resilience claw arm 121 and the toroidal surface of the seat surrounding wall 11 being offset from each other, thereby facilitating demolding from both the top and bottom during processing. Furthermore, the toroidal surface is arranged within the inner circle of the seat surrounding wall 11, and the integrally formed resilience claw arm 121 can directly provide more secure axial limiting for the rope winding shaft. Simultaneously, the outward-facing claw teeth 122 and the inward-facing cover teeth 211 can directly engage above the rope winding shaft, allowing the cover teeth 211 and the cover side wall 23 to retract further inward. The cover side wall 23 can operate in close proximity to the seat surrounding wall 11, resulting in a compact and stable structure that prevents foreign objects from entering and affecting the operation of the internal mechanism. Additionally, the outer side of the outwardly arched curved arc-shaped resilience claw arm 121 is reinforced by abutment, ensuring the compressive strength of the resilience claw arm 121.

In another embodiment, an accommodating space for accommodating the rope winding shaft is provided between the clamping claw 12 and the lower end of the seat surrounding wall 11. This structure enables the clamping claw 12 to directly provide more secure axial limiting for the rope winding shaft.

In another embodiment, the clamping claw 12 is formed at an upper portion of the seat surrounding wall 11. This structure facilitates the engagement of the clamping claw 12 with the cover teeth 211 of the rotary cap, and provides sufficient space at the lower portion of the seat surrounding wall 11 to accommodate at least the shaft body portion of the rope winding shaft, thereby ensuring stable and smooth operation and accommodating the rope.

In another embodiment, more than two clamping claws 12 are arranged around the axis of the rope winding shaft, with their free ends oriented in the same direction. This structure facilitates the simultaneous engagement of two or more clamping claws 12 with the rotary cap, thereby ensuring comprehensive positioning and strength.

In another embodiment, two, three, or four clamping claws 12 are evenly arranged around the axis of the rope winding shaft. This structure ensures that two, three, or four clamping claws 12 simultaneously engage with the rotary cap, thereby guaranteeing balanced positioning, comprehensive engagement, and strength. At the same time, it also restricts the resilience claw arm 121 to a reasonable length range, thereby ensuring the elasticity and strength of the resilience claw arm 121.

In another embodiment, the claw teeth 122 are formed on at least one of the outer circle side or the end portion of the resilience claw arm 121. The claw teeth 122, located on the outer circle side or at the end of the resilience claw arm 121, engage with the cover teeth 211 positioned on the outer circle. When the cover teeth 211 contact the claw teeth 122 along the extension direction of the resilience claw arm 121 and slide relative to it, the claw teeth 122 drive the resilience claw arm 121 to elastically swing toward the inner circle. The claw teeth 122 then recover its deformation outward between adjacent cover teeth 211 and becomes locked in place. When the claw teeth 122 are subjected to pressure from the cover teeth 211 in the rope releasing direction, the outwardly arched, curved arc-shaped resilience claw arm 121 is pressed tightly against the cover tooth 211. The cover teeth 211 enhance the support of the outer circle side of the resilience claw arm 121, preventing the resilience claw arm 121 from bending under pressure and ensuring the compressive strength of the resilience claw arm 121.

In another embodiment, a claw gap 13 is provided between the resilience claw arm 121 and the inner side of the seat surrounding wall 11. The claw gap 13 facilitates the integral demolding and forming of the resilience claw arm 121 and the seat surrounding wall 11. Furthermore, the claw gap 13 also allows the tooth wall ring 21 of the rotary cap to extend inward and correspond to the resilience claw arm 121 positioned in the inner circle, and to closely engage with the claw teeth 122.

In another embodiment, the claw gap 13 has a size for the tooth wall ring 21 and the cover teeth 211 of the rotary cap to insert therein. Based on facilitating the integral demolding and forming of the resilience claw arm 121 and the seat surrounding wall 11, this structure ensures that the claw gap 13 allows the tooth wall ring 21 of the rotary cap to extend inward and correspond to the resilience claw arm 121 positioned in the inner circle, and to closely engage with the claw teeth 122.

In another embodiment, each claw gap 13 forms a continuous bottom ring groove into which the tooth wall ring 21 and cover teeth 211 of the rotary cap extend and rotate. When there are more than two clamping claws 12, the tooth wall ring 21 of the rotary cap may extend into each claw gap 13 to engage with the clamping claws 12, and may continuously rotate along the continuous bottom ring groove formed by each claw gap 13, thereby ensuring continuous rotational engagement with each clamping claw 12.

In another embodiment, the width of the claw gap 13 is greater than the sum of the thickness of the tooth wall ring 21 of the rotary cap and the tooth height of the cover teeth 211. This structure facilitates the smooth insertion of the tooth wall ring 21 of the rotary cap into the claw gap 13 to engage with the clamping claw 12, while maintaining a certain small gap between the cover teeth 211 and the resilience claw arm 121. This prevents contact between the outer circle side of the cover tooth 211 and the resilience claw arm 121 during rotation of the rotary cap, thereby ensuring smooth rotation.

In another embodiment, the resilience claw arm 121 comprises a claw free end capable of swinging inward and outward, and a claw root connected to the inner side of the seat surrounding wall 11. The resilience claw arm 121 is directly connected to the inner side of the seat surrounding wall 11 via the claw root, resulting in a simple and robust structure that is easy to integrally demold and form. Furthermore, the lower space readily accommodates the rope winding shaft, while the upper space readily cooperates with the tooth wall ring 21.

In another embodiment, the claw root is connected to the inner side of the seat surrounding wall 11 via the root connecting portion 123. The root connecting portion 123 may serve as a bridge connecting the claw root and the seat surrounding wall 11, thereby facilitating the formation of a claw gap 13 between the resilience claw arm 121 and the seat surrounding wall 11.

In another embodiment, the root connecting portion 123 is connected to the lower part of the resilience claw arm 121. This structure enables the rope winding shaft to be restricted below the root connecting portion 123, thereby ensuring limiting strength without interfering with the inward and outward movement of the resilience claw arm 121. At the same time, it also facilitates the resilience claw arm 121 forming a portion that extends upward beyond the root connecting portion 123, so that the resilience claw arm 121 and the claw teeth 122 correspondingly engage with the tooth wall ring 21 and the cover teeth 211 in an inner and outer circle fit state.

In another embodiment, the claw tooth 122 is at least partially higher than the root connecting portion 123. This structure ensures that the claw tooth 122 forms a portion extending upward beyond the root connecting portion 123, such that the claw tooth 122, the tooth wall ring 21, and the cover teeth 211 establish a corresponding inner and outer circle mating relationship.

In another embodiment, the claw tooth 122 is entirely higher than the root connecting portion 123. This structure ensures that the claw tooth 122 as a whole extends upward beyond the root connecting portion 123, facilitating the overall claw tooth 122 to establish a corresponding inner and outer circle mating relationship with the tooth wall ring 21 and the cover tooth 211, thereby ensuring a stable mating state.

In another embodiment, the resilience claw arm 121 is at least partially higher than the root connecting portion 123. This structure ensures that the resilience claw arm 121 forms a portion extending upward beyond the root connecting portion 123, such that the resilience claw arm 121 and the claw tooth 122 correspondingly mate with the tooth wall ring 21 and the cover tooth 211 in an inner and outer circle configuration.

In another embodiment, the resilience claw arm 121 is entirely higher than the root connecting portion 123. This structure ensures that the resilience claw arm 121 extends upward beyond the root connecting portion 123, facilitating the overall formation of a corresponding inner and outer circle mating state between the resilience claw arm 121 and the claw tooth 122 with the tooth wall ring 21 and the cover tooth 211. This ensures that the force from the cover tooth 211 is distributed radially along the resilience claw arm 121, preventing deflection of the resilience claw arm 121 and ensuring a stable mating state.

In another embodiment, at least one of the claw root and the root connecting portion 123 is provided with a root protrusion 124 extending toward the inner circle. The root protrusion 124 can, to a certain extent, limit the distance between the resilience claw arm 121 and components of the inner circle, particularly the upper shaft portion 32 of the rope winding shaft, thereby preventing the resilience claw arm 121 from scraping against the upper shaft portion 32 or other components when swinging inward. This ensures that the resilience claw arm 121 swings smoothly and stably, and also provides a certain degree of radial limiting for the rope winding shaft, ensuring that the rope winding shaft rotates smoothly and is not prone to wobbling.

In another embodiment, the height by which the root protrusion 124 extends toward the inner circle is greater than or equal to the tooth height of the claw tooth 122. This structure ensures that the space within the inner circle of the resilience claw arm 121 is sufficient to accommodate the range of inward swinging of the resilience claw arm 121 when the claw tooth 122 is fully disengaged from the cover tooth 211, thereby preventing the resilience claw arm 121 from scraping against components such as the upper shaft portion 32 during inward swinging, ensuring smooth and stable swinging of the resilience claw arm 121, and smooth and steady rotation of the rope winding shaft.

In another embodiment, the root protrusion 124 of each clamping claw 12 forms a radial limiting space into which the upper shaft portion 32 of the rope winding shaft extends. This radial limiting space can effectively provide radial limitation for the upper shaft portion 32, ensuring stable rotation of the rope winding shaft and reducing the likelihood of wobbling.

In another embodiment, the distance between the resilience claw arm 121 and the upper shaft portion 32 of the rope winding shaft is greater than or equal to the tooth height of the claw tooth 122. This structure ensures that the space within the inner circle of the resilience claw arm 121 is sufficient to accommodate the range of inward swinging of the resilience claw arm 121 when the claw tooth 122 is fully disengaged from the cover tooth 211, thereby preventing the resilience claw arm 121 from scraping against the upper shaft portion 32 during inward swinging, ensuring smooth and stable swinging of the resilience claw arm 121, and smooth and steady rotation of the rope winding shaft.

In another embodiment, the root connecting portion 123 gradually widens from the claw root to the inner side of the seat surrounding wall 11. This structure enables the entire root connecting portion 123 to achieve a reasonable strength distribution according to the applied forces. In particular, when the resilience claw arm 121 is subjected to the force of the cover tooth 211, the connection between the root connecting portion 123 and the seat surrounding wall 11, as the location of the maximum force arm, ensures structural strength.

In another embodiment, a limiting protrusion 111 is formed on the inner side of the seat surrounding wall 11. The limiting protrusion 111 can assist the root connecting portion 123 in axially limiting the rope winding shaft or in supporting the tooth wall ring 21.

In another embodiment, the limiting protrusion 111 corresponds to the resilience claw arm 121. This structure facilitates the integrated demolding and forming of the limiting protrusion 111 and the resilience claw arm 121 at the same position with the seat surrounding wall 11. The limiting protrusion 111 and the root connecting portion 123 can form a nearly complete ring-shaped limiting position for axially limiting the rope winding shaft, thereby ensuring limiting strength and balanced contact with the shaft upper wall 311, and ensuring that the rope winding shaft is not prone to deflection or deformation. It also assists the Root connecting portion 123 in providing strong, continuous support to the entire circumference of the tooth wall ring 21.

In another embodiment, the upper surface of the limiting protrusion 111 is flush with the upper surface of the Root connecting portion 123. This structure enables the limiting protrusion 111 to assist the Root connecting portion 123 in providing strong, continuous support to the entire circumference of the tooth wall ring 21, ensuring that the Root connecting portion 123 is not easily deformed by excessive pressure applied to the rotary cap by the operator.

In another embodiment, the lower surface of the limiting protrusion 111 is flush with the lower surface of the Root connecting portion 123. The limiting protrusion 111 and the Root connecting portion 123 may form a nearly complete ring at the limiting position for axial limiting of the rope winding shaft, thereby ensuring limiting strength and balanced contact with the upper wall 311 of the shaft, and preventing the rope winding shaft from deflecting or deforming.

In another embodiment, the limiting protrusion 111 extends along the axis encircling the rope winding shaft. This structure enables the limiting protrusion 111 to form an annular contact surface for limiting the rope winding shaft or the tooth wall ring 21, thereby ensuring balanced limitation and strength.

In another embodiment, the limiting protrusion 111 is positioned lower than the upper surface of at least one of the resilience claw arm 121 or the claw tooth 122. This structure ensures that the claw teeth 122 and the resilience claw arm 121 form portions that extend upward beyond the limiting protrusion 111, such that the claw teeth 122 and the resilience claw arm 121 correspondingly engage with the tooth wall ring 21 and the cover teeth 211 in an inner and outer circle configuration.

In another embodiment, the limiting protrusion 111 is positioned lower than at least one of the resilience claw arm 121 and the claw teeth 122. This structure ensures that the claw teeth 122 and the resilience claw arm 121 as a whole extend upward beyond the limiting protrusion 111, thereby facilitating the formation of a corresponding inner and outer circle engagement between the claw teeth 122 and the resilience claw arm 121 as a whole with the tooth wall ring 21 and the cover teeth 211, thus ensuring the stability of the engagement state.

In another embodiment, a formed through opening 1111 is provided between the limiting protrusion 111 and the adjacent root connecting portion 123. The formed through opening 1111 facilitates the insertion of a mold for forming the claw teeth 122 or the wall clamping portion 112 of the seat surrounding wall 11.

In another embodiment, the formed through opening 1111 is vertically aligned with at least one of the wall clamping portion 112 or the claw teeth 122. This structure ensures that the formed through opening 1111 facilitates the extension of the mold into the corresponding forming claw teeth 122 or the wall clamping portion 112 of the seat surrounding wall 11.

In another embodiment, the lower portion of the seat surrounding wall 11 is formed with a wall clamping portion 112 for securing the rope winding shaft. The wall clamping portion 112 can secure either the upper wall 311 or the lower wall 312 of the rope winding shaft, thereby preventing the rope winding shaft from easily moving downward or disengaging.

In another embodiment, the wall clamping portion 112 is a step protruding in the direction of the axis of the rope winding shaft. The step-shaped wall clamping portion 112 can effectively position and support the rope winding shaft. Preferably, more than two, such as three, step-shaped wall clamping portions 112 are evenly arranged around the inner side of the base to provide balanced support for the rope winding shaft.

In another embodiment, an axial limiting space that restricts the rope winding shaft in the vertical direction is formed between the wall clamping portion 112 and the root connecting portion 123. The wall clamping portion 112 and the root connecting portion 123 cooperate to confine the rope winding shaft within the axial limiting space, ensuring that the rope winding shaft rotates smoothly and steadily without significant wobble.

In another embodiment, the lower part of the wall clamping portion 112 is formed with an inclined surface for the rope winding shaft to be locked in. The inclined surface allows the rope winding shaft to be smoothly and easily locked into the base.

In another embodiment, the seat surrounding wall 11 is provided with a resilience bearing arm 113 capable of swinging inward and outward, with the wall clamping portion 112 formed on the inner side of the resilience bearing arm 113. When engaging with the rope winding shaft, the wall clamping portion 112 is pressed, causing the resilience bearing arm 113 to deform outward. After the rope winding shaft is engaged, the resilience bearing arm 113 returns inward, thereby causing the wall clamping portion 112 to lock beneath the rope winding shaft.

In another embodiment, a gap is formed between the resilience bearing arm 113 and the main body portion of the seat surrounding wall 11. The gap facilitates the inward and outward swinging of the resilience bearing arm 113 relative to the main body portion of the base, and also facilitates the integrally injection-molded formation of the resilience bearing arm 113 with the base.

In another embodiment, the upper end of the seat surrounding wall 11 is provided with an upper extending wall 114 that is higher than the root connecting portion 123. When the tooth wall ring 21 is correspondingly positioned at the outer circle of the clamping claw 12, the upper extending wall 114 may likewise be positioned at the outer circle of the tooth wall ring 21 to provide radial limiting, thereby enabling smooth and stable engagement between the tooth wall ring 21 and the clamping claw 12, as well as smooth and stable rotation of the rotary cap, making it less prone to wobbling.

In another embodiment, the upper extending wall 114 is higher than the resilience claw arm 121. This structure allows, when the release rope pulls out the rotary cap and the cover teeth 211 disengages from the claw teeth 122, the upper extending wall 114 to still be positioned at the outer circle of the tooth wall ring 21 for radial limiting, thereby ensuring that the rotary cap is less likely to wobble or tilt upward.

In another embodiment, the upper extending wall 114 is provided with a wall insertion section 1141 that extends into the cover ring groove 24. The upper extending wall 114 extends into the cover ring groove 24 between the tooth wall ring 21 and the cover side wall 23 via the wall insertion section 1141, such that the cover side wall 23, the wall insertion section 1141, and the cover ring groove 24 are mutually embedded and form a nested inner and outer circle structure with mutual radial limiting. This ensures that the engagement between the tooth wall ring 21 and the clamping claw 12 is stable and smooth, and that the rotation of the rotary cap is stable and smooth without easily wobbling, while also ensuring that the rotary cap is not easily displaced or lifted.

In another embodiment, the maximum depth to which the wall insertion section 1141 extends into the cover ring groove 24 is greater than the distance the rotary cap is withdrawn when releasing the rope rotary buckle. This structure enables the cover side wall 23, wall insertion section 1141, and cover ring groove 24 to remain mutually embedded and form an inner and outer circle arrangement with mutual radial limiting, even after the cover teeth 211 and claw teeth 122 are disengaged by withdrawing the rotary cap to release the rope rotary buckle. This ensures that the rotary cap rotates smoothly and steadily, is not easily shaken, and is not easily displaced or lifted.

In another embodiment, the resilience claw arm 121 is provided with a downwardly extending arm protrusion 1211. The arm protrusion 1211 can support the resilience claw arm 121, particularly when the rotary cap is pressed downward. In this state, the cover teeth 211 applies downward pressure to the claw teeth 122 and the resilience claw arm 121, thereby preventing the resilience claw arm 121 from bending or deforming downward, which could otherwise affect the engagement between the claw teeth 122 and the cover teeth 211. This also ensures the smooth and stable swinging of the resilience claw arm 121 both inwardly and outwardly, preventing any deviation.

In another embodiment, the arm protrusion 1211 is formed on the lower surface of the resilience claw arm 121 and extends toward the rope winding body 31 of the rope winding shaft. The arm protrusion 1211 can be supported on the rope winding body 31, which not only prevents deformation of the resilience claw arm 121 and ensures smooth and stable swinging, but also ensures that it contacts the rope winding shaft with a relatively small area, thereby facilitating the smooth and efficient inward and outward swinging of the resilience claw arm 121.

In another embodiment, the lower end of the arm protrusion 1211 is positioned higher than the lower surface of the root connecting portion 123. This configuration allows a certain gap to be maintained between the arm protrusion 1211 and the upper surface of the rope winding body 31 when the root connecting portion 123 is in contact with the upper surface of the rope winding body 31, thereby ensuring that the arm protrusion 1211 does not scrape against the rope winding body 31 during the inward and outward swinging of the resilience claw arm 121, and thus ensuring smooth and efficient movement of the resilience claw arm 121.

In another embodiment, the lower end of the arm protrusion 1211 is flush with the lower surface of the root connecting portion 123. This configuration allows the arm protrusion 1211 to make slight contact with the upper surface of the rope winding body 31 when the root connecting portion 123 is in contact with the upper surface of the rope winding body 31, thereby ensuring that the arm protrusion 1211 does not excessively scrape against the rope winding body 31 during the inward and outward swinging of the resilience claw arm 121, and thus ensuring smooth and efficient movement of the resilience claw arm 121.

In another embodiment, the protrusion height of the arm protrusion 1211 is less than or equal to the thickness of the root connecting portion 123 or the limiting protrusion 111. This structure allows the arm protrusion 1211 to maintain a certain gap or slight contact with the upper surface of the rope winding body 31 when the root connecting portion 123 or the limiting protrusion 111 is in contact with the upper surface of the rope winding body 31, thereby ensuring that the arm protrusion 1211 does not scrape against the rope winding body 31 during the inward and outward swinging of the resilience claw arm 121, and thus ensuring smooth and efficient movement of the resilience claw arm 121.

In another embodiment, the arm protrusion 1211 is formed between the two ends of the resilience claw arm 121. This structure enables the arm protrusion 1211 to be supported between the two ends of the resilience claw arm 121, specifically at the middle portion of the resilience claw arm 121. While supporting the resilience claw arm 121, it also prevents the middle portion of the resilience claw arm 121 from bending and deforming downward under force, thereby ensuring the strength of the resilience claw arm 121.

In another embodiment, the arm protrusion 1211 is formed at the claw free end of the resilience claw arm 121. This structure enables the arm protrusion 1211 to be supported at the claw free end, making it difficult for the claw free end to move vertically, thereby ensuring that the claw teeth 122 at the claw free end operates accurately and smoothly, and further cooperates accurately and smoothly with the cover teeth 211.

In another embodiment, the distance between the arm protrusion 1211 and the upper shaft portion 32 of the rope winding shaft is greater than or equal to the tooth height of the claw tooth 122. This structure ensures that the space within the inner circle of the resilience claw arm 121 is sufficient to accommodate the range of inward swinging of the resilience claw arm 121 and the arm protrusion 1211 when the claw tooth 122 is fully disengaged from the cover tooth 211. This prevents the resilience claw arm 121 and the arm protrusion 1211 from scraping against components such as the upper shaft portion 32 during inward movement, thereby ensuring smooth and stable swinging of the resilience claw arm 121 and smooth, steady rotation of the rope winding shaft.

In another embodiment, the distance from each point on the outer circle side of the resilience claw arm 121 to the seat surrounding wall 11 is equal. This structure facilitates the efficient and smooth engagement and rotation of the tooth wall ring 21 and the cover tooth 211, both of which have a uniform thickness, with the clamping claw 12.

In another embodiment, the outer circle side of the resilience claw arm 121 gradually approaches the seat surrounding wall 11 from the claw root to the claw free end. This structure enables the resilience claw arm 121 to undergo slight deformation toward the inner circle when the tooth wall ring 21 and the cover teeth 211 are inserted, thereby generating a certain preload force on the engagement between the claw teeth 122 and the cover teeth 211, ensuring efficient and smooth engagement and positioning between the claw tooth 122 and the cover tooth 211.

In another embodiment, the distance from the resilience claw arm 121 to the seat surrounding wall 11 is uniform. This structure facilitates the efficient and smooth rotational engagement of the tooth wall ring 21 and the cover tooth 211, which extend in and cooperate with the clamping claw 12, while ensuring that the resilience force of the resilience claw arm 121 remains balanced and durable.

In another embodiment, the resilience claw arm 121 gradually approaches the seat surrounding wall 11 from the claw root to the claw free end. This structure enables the resilience claw arm 121 to undergo slight deformation toward the inner circle when the tooth wall ring 21 and the cover tooth 211 extend in, thereby generating a certain preload force for the engagement between the claw tooth 122 and the cover tooth 211, ensuring efficient and smooth engagement and positioning between the claw tooth 122 and the cover tooth 211, while maintaining balanced and durable resilience force of the resilience claw arm 121.

In another embodiment, the claw tooth 122 is formed on the outer circle side of the claw free end. The claw tooth 122 located on the outer circle side of the claw free end engages with the cover tooth 211 positioned on the outer circle. When the cover tooth 211 contacts and slides relative to the Claw tooth 122 along the extension direction of the resilience claw arm 121, the claw tooth 122 drives the resilience claw arm 121 to elastically swing toward the inner circle. The claw tooth 122 then recovers its deformation outward between adjacent cover teeth 211 and becomes locked. When the claw tooth 122 is subjected to pressure from the cover tooth 211 in the rope releasing direction, the outwardly arched, curved arc-shaped resilience claw arm 121 is pressed tightly against the cover tooth 211. The cover tooth 211 enhances the support of the outer circle side of the resilience claw arm 121, preventing the resilience claw arm 121 from bending under pressure and ensuring the compressive strength of the resilience claw arm 121. Moreover, the claw tooth 122 formed at the claw free end ensures that the resilience claw arm 121 can achieve a greater swing amplitude of the claw tooth 122 with a smaller swing angle, thereby reducing fatigue of the resilience claw arm 121 and extending its service life.

In another embodiment, a tooth wall gap 14 is provided between the claw tooth 122 and the inner side of the seat surrounding wall 11. The tooth wall gap 14 facilitates the integral demolding and forming of the claw tooth 122 and the seat surrounding wall 11. Furthermore, the tooth wall gap 14 also allows the tooth wall ring 21 of the rotary cap to extend inward and closely engage with the Claw tooth 122.

In another embodiment, the resilience claw arm 121 extends gradually from the claw root to the claw free end in the rope tightening direction. In this configuration, the resilience claw arm 121 is prone to inward deformation when subjected to force in the rope tightening direction, which facilitates the cover tooth 211 rotating in the rope tightening direction. When the rope winding shaft drives the rotary cap to press the claw tooth 122 in the rope releasing direction, the resilience claw arm 121 utilizes its own supporting force to support the claw tooth 122 against the cover tooth 211, thereby preventing reverse rotation and enabling unidirectional rotation of the rope winding shaft.

In another embodiment, the claw tooth 122 comprises a tooth root and a tooth tip, and the claw tooth 122 is gradually inclined toward the rope tightening direction from the tooth root to the tooth tip. This structure facilitates smooth relative rotation between the cover tooth 211 and the claw tooth 122 in the rope tightening direction, and when the rope winding shaft rotates in the rope release direction, the two will engage with each other, thereby providing a distinct unidirectional rotation effect.

In another embodiment, the claw tooth 122 comprises a tooth root and a tooth tip, and the claw tooth 122 comprises a tooth clamping surface 1221 facing the rope tightening direction and a tooth trailing surface 1222 facing the rope release direction, wherein the tooth trailing surface 1222 is gradually inclined toward the rope tightening direction from the tooth root to the tooth tip. The tooth clamping surface 1221 can cooperate with the corresponding tooth surface 2111 of the cover tooth 211 to abut, thereby ensuring that the clamping claw 12 provides an anti-reverse function for the rotary cap. The tooth trailing surface 1222 can cooperate with the corresponding trailing tooth surface 2112 of the cover tooth 211 to generate an inward squeezing effect on the claw tooth 122 along the inner circle, allowing the cover tooth 211 to slide over the claw tooth 122 in the same direction, thereby ensuring that the rotary cap can rotate unidirectionally relative to the clamping claw 12.

In another embodiment, the plane in which the tooth clamping surface 1221 is arranged passes through the axis of the rope winding shaft. In this structure, the tooth clamping surface 1221 can cooperate with the corresponding tooth surface 2111 of the cover tooth 211 to abut and lock, thereby providing an anti-reverse function for the rotary cap.

In another embodiment, the plane on which the tooth clamping surface 1221 is arranged gradually inclines from the tooth root toward the tooth tip in the rope tightening direction. In this structure, the tooth clamping surface 1221 can cooperate with the corresponding tooth surface 2111 of the cover tooth 211 to abut and lock. While preventing reverse rotation of the rotary cap, it also provides the effect that the greater the reverse force on the rotary cap, the tighter the engagement between the tooth clamping surface 1221 and the corresponding tooth surface 2111 of the cover tooth 211, thereby ensuring secure locking.

In another embodiment, more than two claw tooth 122 are provided on the outer circle side of the same resilience claw arm 121. This structure enables the same clamping claw 12 to engage with two or more claw teeth 122 and cover teeth 211, thereby ensuring the stability of the locking position.

In another embodiment, the seat surrounding wall 11 comprises a seat extension wall 115 that extends into the accommodating space of the connection seat 4, and a rope-passing portion 116 corresponding to the respective wall of the connection seat 4. The base is connected to shoes or other items via the connection seat 4. Specifically, the seat extension wall 115 of the base extends into the accommodating space of the connection seat 4 and is fastened together by the buckle structure. The rope-passing portion 116 of the base corresponds to the respective portion of the connection seat 4. The rope rotary buckle passes above the corresponding portion through the rope-passing portion 116, and the rope winding shaft is used to tighten or loosen the rope rotary buckle.

In another embodiment, the seat surrounding wall 11 is provided with a rope-through portion 117 opposite the rope-passing portion 116. The rope winding shaft is connected to the rope rotary buckle through the rope threading hole, allowing the rope rotary buckle to enter and exit the rope accommodating cavity of the rope rotary buckle via the rope-passing portion 116. During threading, the rope-through portion 117 may be used to pull the rope rotary buckle out for operator manipulation, such as tying a knot at the rope end to form a stopper, or directly threading the rope end again.

In another embodiment, the rope-passing portion 116 and the rope-through portion 117 correspond to each other and are disposed on opposite sides of the rope winding shaft. Specifically, the rope winding shaft is positioned between the rope-passing portion 116 and the rope-through portion 117. The rope rotary buckle is threaded into the rope accommodating cavity of the rope rotary buckle from the rope-passing portion 116, then passes through the rope threading hole, and exits from the rope-through portion 117. After the operator ties a knot at the rope end to form a stopper and retracts it into the rope accommodating cavity, it is secured at the rope threading hole to achieve connection between the rope rotary buckle and the rope winding shaft, or the rope end may be directly threaded again.

In another embodiment, the rope-through portion 117 comprises a rope-through hole formed in the side wall of the base. The rope-through hole allows the end of the rope rotary buckle to pass out of or retract into the rope-accommodating cavity.

In another embodiment, the rope-through hole is dimensioned to permit passage of the rope rotary buckle clamp head. This structure facilitates the passage of the knotted rope end, forming a clamp head, through the rope-through hole and securing it at the rope-through hole. Specifically, the rope-through hole may be an elongated shape extending circumferentially along the seat surrounding wall 11, which facilitates threading operations corresponding to the rope-through hole and the threading hole, does not occupy vertical space, and ensures the strength of the seat surrounding wall 11.

In another embodiment, a convex ring 118 is formed on the outer peripheral surface of the seat surrounding wall 11. The convex ring 118 can enhance the strength of the seat surrounding wall 11. When the convex ring 118 is positioned above the seat surrounding wall 11 of the connection seat 4, it can limit the relative position between the seat surrounding wall 11 and the connection seat 4, thereby ensuring stable engagement between the two. When the convex ring 118 is positioned below the cover side wall 23, it can support the rotary cap, block the gap between the rotary cap and the seat surrounding wall 11, and, while ensuring smooth rotation of the rotary cap, also prevent foreign matter from entering the gap. The convex ring 118 can also provide a transition between the seat surrounding wall 11 and the cover side wall 23, thereby ensuring operational tactility.

In another embodiment, the convex ring 118 is at least as high as either the rope-passing portion 116 or the rope-through portion 117. This structure ensures that the convex ring 118 limits the position of the seat surrounding wall 11 and the connection seat 4, thereby ensuring stable engagement between the seat surrounding wall 11 and the connection seat 4, supporting the rotary cap, blocking the gap between the rotary cap and the seat surrounding wall 11, providing a transition between the seat surrounding wall 11 and the cover side wall 23, maintaining operational tactility, and being level with the rope-passing portion 116. This design minimizes the size between the rotary cap and the seat surrounding wall 11, thereby further reducing the overall height of the rope rotary buckle.

In another embodiment, the rope-passing portion 116 is formed on the convex ring 118. This structure enables the rope-passing portion 116 to be integrated with the convex ring 118, ensuring strength, reducing height, and providing strong overall integrity.

In another embodiment, the upper surface of the convex ring 118 is planar. This structure allows the convex ring 118 to be arranged parallel to the cover side wall 23, thereby supporting the rotary cap, facilitating smooth rotation of the rotary cap, and blocking the gap between the rotary cap and the seat surrounding wall 11.

In another embodiment, the lower surface of the convex ring 118 is planar. This structure enables the convex ring 118 to fit closely with the seat surrounding wall 11 of the connection seat 4, providing effective vertical limitation, ensuring stable engagement between the seat surrounding wall 11 and the connection seat 4, and resulting in a smooth overall surface, thereby ensuring operational tactility.

In another embodiment, the convex ring 118 is formed with a ring notch 1181 corresponding to the rope-through portion 117. The ring notch 1181 does not obstruct the rope-through portion 117, thereby facilitating rope threading.

In another embodiment, the extent to which the tooth wall ring 21 extends into the bottom ring groove of the base is less than the distance by which the rotary cap is withdrawn when releasing the rope. This structure enables the tooth wall ring 21 to disengage from the bottom ring groove when the rotary cap is withdrawn to release the rope, thereby allowing the cover tooth 211 and the claw tooth 122 to disengage and unlock.

In another embodiment, the cover body 2 comprises a cover top wall 22 and a cover side wall 23. This structure enables the rotary cap to form a configuration that accommodates the internal components, and the cover side wall 23 facilitates the operator's grip and manipulation.

In another embodiment, the toroidal surface on which the tooth wall ring 21 is arranged is at the inner circle of the toroidal surface on which the seat surrounding wall 11 is arranged, and the tooth wall ring 21 is formed on the inner surface of the cover top wall 22. This structure facilitates the extension of the tooth wall ring 21 into the bottom ring groove, allowing the cover tooth 211 to correspondingly engage with the claw tooth 122.

In another embodiment, the distance from the root of the cover tooth 211 to the axis of the rope winding shaft is less than or equal to the distance from the tip of the claw tooth 122 to the axis of the rope winding shaft. This structure enables the resilience claw arm 121 to undergo slight deformation toward the inner circle when the tooth wall ring 21 and the cover tooth 211 are inserted, thereby generating a certain preload force on the engagement between the claw tooth 122 and the cover tooth 211, ensuring efficient and smooth engagement and positioning between the claw tooth 122 and the cover tooth 211.

In another embodiment, a cover gap is provided between the tooth wall ring 21 and the cover side wall 23. The cover gap facilitates integrated demolding and forming of the cover side wall 23 and the tooth wall ring 21, at least preventing the root portions of the tooth wall ring 21 and the cover side wall 23 from becoming excessively thick and thereby affecting the molding precision of the resin material. Moreover, the cover gap allows the wall insertion section 1141 to extend therein for internal and external radial limiting, thereby ensuring the rotational precision and smoothness of the rotary cap.

In another embodiment, a cover ring groove 24 is formed between the tooth wall ring 21 and the cover side wall 23 to accommodate the insertion and limiting of the wall insertion section 1141. The wall insertion section 1141 extends into the cover ring groove 24 between the tooth wall ring 21 and the cover side wall 23, such that the cover side wall 23, the wall insertion section 1141, and the cover ring groove 24 are mutually embedded and form an inner and outer circle arrangement with mutual radial limiting. This ensures that the engagement between the tooth wall ring 21 and the clamping claw 12 is stable and smooth, and that the rotary cap rotates smoothly and steadily without easily wobbling, while also ensuring that the rotary cap is not easily displaced or lifted.

In another embodiment, the depth of the cover ring groove 24 is greater than the distance by which the rotary cap is pulled out when releasing the rope rotary buckle. This structure enables the cover side wall 23, wall insertion section 1141, and cover ring groove 24 to remain mutually embedded and form an inner and outer circle arrangement with mutual radial limiting, even after the cover tooth 211 and claw tooth 122 are disengaged by withdrawing the rotary cap to release the rope rotary buckle. This ensures that the rotary cap rotates smoothly and steadily, is not easily shaken, and is not easily displaced or lifted.

In another embodiment, the cover ring groove 24 is provided with a inner circle groove wall 241 corresponding to the inner circle side of the wall insertion section 1141, and an outer circle groove wall 242 corresponding to the outer circle side of the wall insertion section 1141. The inner circle groove wall 241 is parallel to the inner circle side of the wall insertion section 1141, and the outer circle groove wall 242 is parallel to the outer circle side of the wall insertion section 1141. This structure allows the cover side wall 23, the wall insertion section 1141, and the cover ring groove 24 to be mutually inserted and fitted, enabling smooth and relatively parallel rotation. Furthermore, the three components form a narrow, bent gap, which prevents external debris from entering the interior and ensures that the components operate durably, smoothly, and reliably.

In another embodiment, the outer circle groove wall 242 extends to the lower end of the cover side wall 23. This structure enables the outer circle groove wall 242 and the inner surface of the cover side wall 23 to combine and form an integrated side surface that fits closely and parallel to the outer side of the wall insertion section 1141 or the seat surrounding wall 11, thereby increasing the corresponding mating surface between the rotary cap and the base, ensuring mutual limitation and stable operation, making the rotary cap less prone to tilting, and facilitating direct demolding of the interior of the rotary cap, thus reducing the complexity of the mold.

In another embodiment, a cover rotation shaft 25 is provided at the rotation axis of the cover top wall 22, extending downward into the rope winding shaft axial hole 33. The cover rotation shaft 25 can extend into the rope winding shaft to form an internal and external fit, ensuring the coaxiality and smoothness of rotation between the rotary cap and the rope winding shaft.

In another embodiment, the cover rotation shaft 25 comprises an upper rotation shaft body 251 and a lower limiting ring. The cover rotation shaft 25 can be engaged with corresponding components of the rope winding shaft, such as the resilience clamping portion 34, via the limiting ring, thereby enabling relative rotation while also providing an axial locking and limiting function. Furthermore, the rotation shaft body 251 can cooperate with the corresponding shaft hole 33 of the rope winding shaft to ensure coaxiality during relative rotation.

In another embodiment, the limiting ring comprises an upper limiting ring 252 positioned above and a lower limiting ring 253 positioned below. The upper limiting ring 252 and the lower limiting ring 253 may be used in conjunction with the resilience clamping portion 34 of the rope winding shaft. When the rotary cap is pressed in, the resilience clamping portion 34 engages above the upper limiting ring 252 to achieve a locking effect, thereby maintaining the engagement between the cover tooth 211 and the claw tooth 122, as well as between the driving tooth 26 and the driven tooth 321. When the rotary cap is pulled out, the resilience clamping portion 34 engages below the upper limiting ring 252 to achieve a locking effect, thereby maintaining the disengagement between the cover tooth 211 and the claw tooth 122, or between the driving tooth 26 and the driven tooth 321. Simultaneously, the lower limiting ring 253 engages with the resilience clamping portion 34 of the rope winding shaft to prevent the cover rotation shaft 25 from being completely pulled out.

In another embodiment, the diameter of the upper limiting ring 252 is smaller than that of the lower limiting ring 253. This structure ensures that, when the upper limiting ring 252 engages with the resilience clamping portion 34 to achieve upper and lower snap positioning, the lower limiting ring 253 and the resilience clamping portion 34 can have a larger snap size, thereby ensuring the snap strength between the lower limiting ring 253 and the resilience clamping portion 34. This allows the cover rotation shaft 25 to be inserted and withdrawn within a certain range along the axis in the shaft hole 33 of the rope winding shaft, without being easily completely withdrawn.

In another embodiment, the diameter of the upper limiting ring 252 is smaller than that of the rotation shaft body 251. This structure enables the upper limiting ring 252 to be easily inserted into the shaft hole 33 when the rotation shaft body 251 corresponds to the inner diameter of the shaft hole 33 of the rope winding shaft, while also reserving space for the dimensions of the lower limiting ring 253. For example, when the diameter of the lower limiting ring 253 is less than or equal to that of the rotation shaft body 251, the lower limiting ring 253 can be readily inserted into the shaft hole 33, and it further facilitates the lower limiting ring 253 and the resilience clamping portion 34 having a larger locking opening size than the upper limiting ring 252.

In another embodiment, the diameter of the lower limiting ring 253 is less than or equal to that of the rotation shaft body 251. This structure enables the lower limiting ring 253 to be easily inserted into the shaft hole 33 when the rotation shaft body 251 corresponds to the inner diameter of the shaft hole 33 of the rope winding shaft, and also facilitates the lower limiting ring 253 and the resilience clamping portion 34 having a larger locking opening size than the upper limiting ring 252, while further facilitating the demolding and forming of the rotation shaft body 251 portion.

In another embodiment, an upper neck portion 254 is formed between the upper limiting ring 252 and the cover rotation shaft 25. When the rotary cap is pressed in, the resilience clamping portion 34 engages at the upper neck portion 254 to achieve a locking effect, maintaining the engagement between the cover tooth 211 and the claw tooth 122, as well as between the driving tooth 26 and the driven tooth 321.

In another embodiment, a lower neck portion 255 is formed between the lower limiting ring 253 and the upper limiting ring 252. When the rotary cap is pulled out, the resilience clamping portion 34 engages at the lower neck portion 255 to achieve a locking effect, maintaining the disengagement between the cover tooth 211 and the claw tooth 122, or between the driving tooth 26 and the driven tooth 321.

In another embodiment, the edge of the upper limiting ring 252 is provided with an inclined surface 6, along which the arm clamping block 342 of the rope winding shaft slides. The upper limiting ring 252 presses the arm clamping block 342 of the rope winding shaft via the inclined surface 6, causing the resilience clamping arm 341 to elastically swing outward, thereby allowing the arm clamping block 342 to slide along the upper limiting ring 252 and enabling the switching of the arm clamping block 342 between the upper and lower positions of the upper limiting ring 252.

In another embodiment, the lower limiting ring 253 is provided with a ring anti-detachment clamping surface 2531, which faces upward and clamps the arm clamping block 342. When the rotary cap is pulled out, the lower limiting ring 253 is retained at the arm clamping block 342 by the ring anti-detachment clamping surface 2531, thereby preventing the rotary cap from completely detaching from the base.

In another embodiment, the ring anti-detachment clamping surface 2531 is a plane perpendicular to the axis of the cover rotation shaft 25. This structure enables the force exerted by the ring anti-detachment clamping surface 2531 on the arm clamping block 342 to be distributed axially when the cover rotation shaft 25 is being pulled out, thereby agaping an outward force component on the arm clamping block 342 that could cause the resilience clamping portion 34 to swing outward and become disengaged. Furthermore, compared to an undercut structure, the ring anti-detachment clamping surface 2531 is easier to demold and form.

In another embodiment, the lower limiting ring 253 is provided at its lower end with a downward-facing annular inclined surface 2532, which is inclined from top to bottom toward the axis of the cover rotation shaft 25. When the cover rotation shaft 25 is inserted into the shaft hole 33, as the lower limiting ring 253 passes the arm clamping block 342, the lower limiting ring 253 utilizes the annular inclined surface 2532 to smoothly pass through the arm clamping block 342.

In another embodiment, both the upper limiting ring 252 and the lower limiting ring 253 are complete rings. This structure enables continuous and smooth relative rotation between the cover rotation shaft 25 and the rope winding shaft.

In another embodiment, a rotation shaft hole 256 is formed within the cover rotation shaft 25. The rotation shaft hole 256 can reduce the material thickness of the cover rotation shaft 25, prevent deformation during resin molding, and ensure molding precision.

In another embodiment, the rotation shaft hole 256 is formed at the lower end of the cover rotation shaft 25, and its length is less than or equal to the length of the cover rotation shaft 25. This structure ensures the strength of the cover rotation shaft 25 and that the cover top wall 22 above the rotation shaft hole 256 possesses sufficient thickness and strength, while also minimizing the material thickness of each part of the cover rotation shaft 25 as much as possible, preventing deformation during resin molding, and ensuring molding precision.

In another embodiment, the cover body 2 is provided with a driving portion for driving the rope winding shaft to rotate. The rotary cap drives the driven portion of the rope winding shaft via the driving portion, causing the rope winding shaft to rotate in the rope tightening direction, and, through the cooperation of the driving portion and the driven portion, prevents the rope winding shaft from rotating in the rope releasing direction.

In another embodiment, the driving portion is a driving tooth formed on at least one of the cover top wall 22 and the cover rotation shaft 25. The driving portion engages and links with the driven portion via the driving tooth 26.

In another embodiment, the driving tooth 26 comprises a plurality of tooth units 261 uniformly arranged around the cover rotation shaft 25. The driving tooth 26, through a plurality of tooth units 261, enables engagement and linkage with the driven portion at any angle and in all directions.

In another embodiment, the tooth unit 261 comprises a driving tooth surface 2611 oriented toward the rope tightening direction and a driving tooth reverse surface 2612 oriented toward the rope releasing direction. The driving tooth reverse surface 2612 is an inclined surface that gradually inclines toward the rope tightening direction from top to bottom. The tooth unit 261, via the driving tooth reverse surface 2612, enables engagement with the driven tooth 321 of the driven portion at any angle and in all directions, and, through the driving tooth surface 2611, drives and blocks the driven tooth 321 to prevent reverse rotation.

In another embodiment, the driving tooth surface 2611 extends from top to bottom along the axis of the rope winding shaft. The driving tooth surface 2611 of this structure can cooperate with and abut against the driven surface 32111 of the driven tooth 321, thereby providing a driving function to the rope winding shaft and preventing reverse rotation.

In another embodiment, the driving tooth surface 2611 is an inclined surface that gradually inclines downward in the rope tightening direction. The driving tooth surface 2611 of this structure can cooperate with and abut against the driven surface 32111 of the driven tooth 321. While providing a driving function and preventing reverse rotation of the driven tooth 321, it also achieves the effect that the greater the reverse force on the rope winding shaft, the more tightly the driving tooth surface 2611 engages with the driven surface 32111 of the driven tooth 321, thereby ensuring secure locking.

In another embodiment, the driving tooth 26 is positioned within the inner circle of the cover tooth 211, and an accommodating gap for the accommodating claw 12 is provided between the driving tooth 26 and the cover tooth 211. This structure facilitates the engagement of the cover tooth 211, the clamping claw 12, and the driving tooth 26 within a relatively small space, resulting in a compact and stable configuration. Additionally, the cover tooth 211 and the clamping claw 12, which are located at the periphery, have sufficient space for movement, thereby ensuring both the resilience release space and the strength of the clamping claw 12.

In another embodiment, the distance between the driving tooth 26 and the cover tooth 211 is greater than the sum of the radial thickness of the resilience claw arm 121 and the tooth height of the Claw tooth 122. This structure ensures that there is sufficient space between the driving tooth 26 and the cover tooth 211 to allow the clamping claw 12 to swing inward and outward.

In another embodiment, the driving tooth 26 is formed on the inner surface of the cover top wall 22, with a rotation shaft gap 27 provided between it and the cover rotation shaft 25. The driving tooth 26 formed on the cover top wall 22 facilitates the rotary cap in achieving a direct disengagement or engagement state between the driving tooth 26 and the driven tooth 321 through the action of pulling away from or approaching the base. Furthermore, the rotation shaft gap 27 allows the upper shaft inner wall 323 of the rope winding shaft to extend inward for internal and external radial limiting, thereby ensuring coaxiality of the relative rotation between the rotary cap and the rope winding shaft. The rotation shaft gap 27 also separates the driving tooth 26 from the root of the cover rotation shaft 25, thus preventing excessive material thickness at this location, which could affect molding precision.

In another embodiment, the rotation shaft gap 27 is dimensioned to accommodate the inner wall 323 of the upper shaft of the rope winding shaft. The rotation shaft gap 27 allows the inner wall 323 of the upper shaft of the rope winding shaft to extend therein for internal and external radial limiting, thereby ensuring the coaxiality of the relative rotation between the rotary cap and the rope winding shaft.

In another embodiment, an annular protrusion 28 corresponding to the cover ring groove 24 is formed at the edge of the upper surface of the cover top wall 22. The annular protrusion 28 enables the cover top wall 22 to have sufficient thickness at the position corresponding to the cover ring groove 24, so that the cover ring groove 24 has sufficient depth to cooperate with the wall insertion section 1141, while also ensuring the strength of the cover top wall 22 at this location. The inner circle of the convex ring 28 also forms a region for accommodating decorative components such as epoxy drops, logo patterns, and the like, and provides a certain degree of protection for the decorative components.

In another embodiment, the cover body 2, tooth wall ring 21, cover tooth 211, cover rotation shaft 25, and driving portion are integrally injection molded. A rotary cap with all components integrally injection-molded can ensure strength, reduce costs, and improve efficiency.

In another embodiment, the rope winding body 31 comprises a shaft upper wall 311 positioned below the clamping claw 12, a shaft lower wall 312 disposed beneath the shaft upper wall 311, and a rope winding main body 313 connected between the shaft upper wall 311 and the shaft lower wall 312. The diameter of the rope winding main body 313 is smaller than that of the shaft upper wall 311 and the shaft lower wall 312. This structure provides a space for winding the rope rotary buckle between the shaft upper wall 311 and the shaft lower wall 312. The rope winding shaft utilizes the rope winding main body 313 to wind the rope rotary buckle, while the shaft upper wall 311 and the shaft lower wall 312 can restrict the wound rope rotary buckle in the vertical direction.

In another embodiment, the edge of the upper shaft wall 311 is provided with a wall notch 3111 for the wall clamping portion 112 to pass through. When installing the rope winding shaft into the base, the upper shaft wall 311 can be directly installed by aligning the wall notch 3111 with the wall clamping portion 112.

In another embodiment, the upper shaft portion 32 comprises a driven portion corresponding to the driving portion for toggling. The rope winding shaft engages with the rotary cap's driving portion via the driven portion, and is driven by the rotary cap to rotate the rope winding shaft in the rope tightening direction. The cooperation between the driving portion and the driven portion prevents the rope winding shaft from rotating in the rope releasing direction.

In another embodiment, the driven portion is a driven tooth 321 corresponding to the driving tooth 26. The driven portion engages and interacts with the driving tooth 26 via the driven tooth 321.

In another embodiment, the driven tooth 321 comprises a plurality of tooth units 3211 uniformly arranged around the axis of the rope winding shaft. The driven tooth 321, through the plurality of tooth units 3211, enables engagement and interaction with the driving tooth 26 at any angle and in all directions.

In another embodiment, the single tooth 3211 has a driven surface 32111 facing the rope releasing direction and a driven reverse surface 32112 facing the rope tightening direction. The driven reverse surface 32112 is an inclined surface that gradually inclines downward in the rope tightening direction. The single tooth 3211 enables the driving tooth 26 to engage and interlock at any angle in all directions via the driven reverse surface 32112, and, through the driven surface 32111, is driven by and resists reverse movement from the driving tooth 26.

In another embodiment, the driven surface 32111 extends from top to bottom along the axis of the rope winding shaft. The driven surface 32111 of this structure can cooperate with the driving tooth surface 2611 of the driving tooth 26 to abut and lock, thereby providing driving force to the rope winding shaft and preventing reverse rotation.

In another embodiment, the driven surface 32111 is an inclined surface that gradually inclines downward in the rope tightening direction. In this structure, the driven surface 32111 can cooperate with and abut against the driving tooth surface 2611 of the driving tooth 26 to achieve a locking effect. While providing a driving function and preventing reverse rotation of the driven tooth 321, it also ensures that the greater the reverse force on the rope winding shaft, the more tightly the driven surface 32111 can engage with the driving tooth surface 2611 of the driving tooth 26, thereby ensuring the reliability of the locking position.

In another embodiment, the upper shaft portion 32 comprises an upper shaft outer wall 322, which is arranged on the outer circle of the driven tooth 321 and corresponds to the clamping claw 12. The upper shaft outer wall 322 may substitute for the driven tooth 321 in corresponding to the clamping claw 12; even if it comes into contact with the clamping claw 12, it will not scratch the clamping claw 12. It can also provide radial limiting for the driving tooth 26 engaged with the driven tooth 321, ensuring coaxial alignment between the driving tooth 26 and the driven tooth 321. Furthermore, it can serve to reinforce the driven tooth 321.

In another embodiment, the upper shaft portion 32 comprises an upper shaft inner wall 323, which is positioned within the inner circle of the driven tooth 321 and corresponds to the cover rotation shaft 25. The upper shaft outer wall 322 may substitute for the driven tooth 321 in corresponding to the cover rotation shaft 25; even if it comes into contact with the cover rotation shaft 25, it will not scratch the cover rotation shaft 25. It can also provide radial limiting for the driving tooth 26 engaged with the driven tooth 321, ensuring coaxial alignment between the driving tooth 26 and the driven tooth 321. Furthermore, it can serve to reinforce the driven tooth 321.

In another embodiment, the shaft body is formed with a shaft hole 33 for the cover rotation shaft 25 to extend into. The shaft hole 33 allows the cover rotation shaft 25 of the rotary cap to extend into it, forming an internal-external fit, thereby ensuring the coaxiality and smoothness of rotation between the rotary cap and the rope winding shaft.

In another embodiment, the shaft hole 33 penetrates vertically through the shaft body along its axis. This structure facilitates the overall passage of the rope winding shaft through the shaft hole 33 to engage with the cover rotation shaft 25, ensuring axial fit dimensions and guaranteeing the coaxiality and smoothness of rotation between the rotary cap and the rope winding shaft; moreover, it is conducive to the demolding and forming of the resilience clamping portion 34.

In another embodiment, the upper or lower portion of the shaft hole 33 is a circular hole that cooperates with the circumferential surface of the cover rotation shaft 25 to achieve radial limiting. The shaft hole 33 in the form of a circular hole can provide continuous and stable rotational engagement with the cover rotation shaft 25.

In another embodiment, a resilience clamping portion 34 is further provided at the shaft hole 33 to cooperate with the cover rotation shaft 25. The rope winding shaft is engaged with the limiting ring of the cover rotation shaft 25 via the resilience clamping portion 34, thereby enabling relative rotation while also providing an axial locking and limiting function. Furthermore, the resilience clamping portion 34 can apply a certain resilience clamping force to the cover rotation shaft 25, thereby preventing the cover rotation shaft 25 from wobbling.

In another embodiment, the resilience clamping portion 34 comprises a resilience clamping arm 341 disposed on the wall of the shaft hole 33, and an arm clamping block 342 provided at the free end of the resilience clamping arm 341, which cooperates with the limiting ring. The resilience clamping portion 34 cooperates with the upper limiting ring 252 and the lower limiting ring 253 of the rope winding shaft. When the cover rotation shaft 25 drives the limiting ring to move axially, it compresses the arm clamping block 342, causing the resilience clamping arm 341 to elastically deflect outward. When the compressive force is removed, the resilience clamping arm 341 drives the arm clamping block 342 to return inward to its original position. When the rotary cap is pressed in, the resilience clamping portion 34 is engaged above the upper limiting ring 252 to achieve a locking effect, maintaining the engagement between the cover tooth 211 and the claw tooth 122, as well as between the driving tooth 26 and the driven tooth 321. When the rotary cap is pulled out, the resilience clamping portion 34 engages below the upper limiting ring 252 to achieve a locking effect, thereby maintaining the disengagement between the cover tooth 211 and the claw tooth 122, or between the driving tooth 26 and the driven tooth 321. Simultaneously, the lower limiting ring 253 engages with the resilience clamping portion 34 of the rope winding shaft to prevent the cover rotation shaft 25 from being completely pulled out.

In another embodiment, the arm clamping block 342 protrudes into the shaft hole 33 region. The arm clamping block 342, which protrudes into the shaft hole 33 region, can cooperate with the limiting ring to achieve a retaining effect.

In another embodiment, the edge of the arm clamping block 342 is provided with an inclined surface 6, along which the upper limiting ring 252 slides. The upper limiting ring 252 presses the arm clamping block 342 of the rope winding shaft via the inclined surface 6, causing the resilience clamping arm 341 to elastically swing outward, thereby allowing the arm clamping block 342 to slide along the upper limiting ring 252 and enabling the switching of the arm clamping block 342 between the upper and lower positions of the upper limiting ring 252.

In another embodiment, the arm clamping block 342 is provided with an arm anti-detachment clamping surface 3421, which faces downward and is configured to be engaged by the ring anti-detachment clamping surface 2531. When the rotary cap is pulled out, the lower limiting ring 253 is clamped at the arm anti-detachment clamping surface 3421 by the ring anti-detachment clamping surface 2531, thereby preventing the rotary cap from being completely detached from the base.

In another embodiment, the arm anti-detachment clamping surface 3421 is a plane perpendicular to the axis of the cover rotation shaft 25. This structure enables the force exerted by the ring anti-detachment clamping surface 2531 on the arm anti-detachment clamping surface 3421, when the cover rotation shaft 25 is to be withdrawn, to be distributed along the axis, thereby preventing the generation of an outward force component on the arm clamping block 342 that would cause the resilience clamping arm 341 to swing outward and result in disengagement.

In another embodiment, the arm anti-detachment clamping surface 3421 is inclined downward from the outer circle toward the inner circle. This structure enables the force exerted by the ring anti-detachment clamping surface 2531 on the arm anti-detachment clamping surface 3421, when the cover rotation shaft 25 is to be withdrawn, to cause the ring anti-detachment clamping surface 2531 and the arm anti-detachment clamping surface 3421 to become increasingly tightly engaged, thereby preventing the generation of an outward force component on the arm clamping block 342 that would cause the resilience clamping arm 341 to swing outward and result in disengagement.

In another embodiment, the resilience clamping arm 341 comprises an arm root connected to the wall of the shaft hole 33, and an arm free end that carries the arm clamping block 342; the resilience clamping arm 341 gradually extends downward from the arm root to the arm free end. When the cover rotation shaft 25 is inserted from top to bottom into the shaft hole 33 and passes the arm free end, the limiting ring presses the arm clamping block 342 at the arm free end, thereby causing the resilience clamping arm 341 to elastically swing outward. After the limiting ring slides past the arm clamping block 342, the resilience clamping arm 341 drives the arm clamping block 342 to elastically return inward, so that the arm clamping block 342 engages with the limiting ring. In particular, when the lower limiting ring 253 is caught at the arm clamping block 342, under the action of a pulling force, the lower limiting ring 253 presses against the resilience clamping arm 341 along the resilience clamping arm 341, and the compressive strength of the resilience clamping arm 341 material itself resists the pulling force, thereby ensuring the strength required to prevent the cover rotation shaft 25 from being pulled out.

In another embodiment, the cross-sectional area of the resilience clamping arm 341 gradually increases from bottom to top. This structure ensures that the strength of the resilience clamping arm 341 gradually increases from the arm free end to the arm root, thereby ensuring the strength and resilience performance of the resilience clamping arm 341.

In another embodiment, the resilience clamping arm 341 comprises an arm inner side surface 3411 facing the shaft hole 33, an arm outer side surface 3412 facing the opposite direction, and two arm side surfaces 3413 positioned between the arm inner side surface 3411 and the arm outer side surface 3412. This structure allows all portions of the resilience clamping arm 341, except for the arm root, to remain in a elastically movable state, thereby ensuring the overall resilience deformation capability of the resilience clamping arm 341.

In another embodiment, the distance between the arm inner side surface 3411 and the arm outer side surface 3412 gradually increases from bottom to top. That is, the resilience clamping arm 341 gradually increases in thickness in the radial direction of the rope winding shaft from the arm free end to the arm root. This structure ensures both resilience deformation performance and strength in the radial direction of the rope winding shaft. Furthermore, during demolding, the strength of the resilience clamping arm 341 is maintained, making it less susceptible to material accumulation or deformation.

In another embodiment, the distance between both arm side surfaces 3413 gradually increases from bottom to top. That is, the resilience clamping arm 341 gradually increases in thickness in the axial direction of the rope winding shaft from the arm free end to the arm root. This structure ensures that the resilience clamping arm 341 is readily capable of resilience deformation in the radial direction of the rope winding shaft while also maintaining strength. Furthermore, during demolding, the strength of the resilience clamping arm 341 is maintained, making it less susceptible to material accumulation or deformation.

In another embodiment, the arm inner side surface 3411 and the inner wall of the shaft hole 33 are located on the same circular pivot surface. This structure enables the resilience clamping arm 341 and the inner wall of the shaft lock to jointly provide radial limiting for the cover rotation shaft 25, without interfering with the relative rotation of the cover rotation shaft 25.

In another embodiment, the arm inner side surface 3411 is inclined from top to bottom toward the axis of the shaft hole 33. This structure allows the resilience clamping arm 341 to exert a certain preload force on the cover rotation shaft 25, ensuring that the cover rotation shaft 25 does not wobble during relative rotation.

In another embodiment, the arm outer side surface 3412 is parallel to the axis of the shaft hole 33.

In another embodiment, the arm outer side surface 3412 is inclined from top to bottom toward the axis of the shaft hole 33. This structure facilitates demolding of the arm outer side surface 3412 from below, making it less prone to material accumulation or deformation.

In another embodiment, the cross-section of the resilience clamping arm 341 is arcuate about the axis of the shaft hole 33. This structure allows the resilience clamping arm 341 to rotate about the cover rotation shaft 25, ensuring engagement with the cover rotation shaft 25 at any angle and providing balanced locking force.

In another embodiment, at least one of the lower end face of the resilience clamping arm 341 and the arm anti-detachment clamping surface 3421 is provided with an toggle portion 343 for toggling. When it is necessary to disassemble the rotary cap, the toggle portion 343 may be pressed outward to drive the resilience clamping arm 341 to swing outward, until sufficient space is provided to allow the cover rotation shaft 25 to be pulled upward.

In another embodiment, the toggle portion 343 is a protrusion or a groove. The operator may apply an outward force to the resilience clamping arm 341 by means of the toggle portion 343 in the form of a protrusion or groove, serving as a force application base.

In another embodiment, the toggle portion 343 is a bar-shaped protrusion located between the side surfaces 3413 of both arms and extends toward the side surfaces 3413 of both arms. That is, the extension direction of the toggle portion 343 in the form of a bar-shaped protrusion is perpendicular to the swinging direction of the resilience clamping arm 341, which facilitates force application.

In another embodiment, the shaft body is formed with an annular gap surrounding the resilience clamping arm 341. The annular gap 35 can serve as a space for the resilience clamping arm 341 to move relative to the main portion of the shaft body, and also facilitates the integral demolding and molding of the resilience clamping arm 341 and the shaft body.

In another embodiment, the annular gap 35 is of uniform width from top to bottom.

In another embodiment, the annular gap 35 gradually widens from top to bottom. This structure enables the annular gap 35 to accommodate the increasing swing range of the resilience clamping arm 341 from top to bottom; moreover, a gap that is narrower on the inside and wider on the outside is conducive to demolding and molding.

In another embodiment, the annular gap 35 comprises a back gap 351 corresponding to the arm outer side surface 3412, and a side gap 352 corresponding to both arm side surfaces 3413. This structure, by means of the annular gap 35, ensures that the portion of the resilience clamping arm 341 other than the arm root remains in a free state, and also facilitates demolding and forming of each side surface of the resilience clamping arm 341.

In another embodiment, at least the width of the lower end of the back gap 351 is greater than the buckling depth of the upper limiting ring 252 and the arm clamping block 342. This structure provides the back gap 351 with sufficient space to allow the arm clamping block 342 to swing outward when disengaging from the upper limiting ring 252.

In another embodiment, the width of at least the lower end of the back gap 351 is greater than the buckling depth between the lower limiting ring 253 and the arm clamping block 342. This structure allows the back gap 351 to provide sufficient space for the lower limiting ring 253 to be inserted into the lower end of the arm clamping block 342, thereby enabling the arm clamping block 342 to swing outward.

In another embodiment, at least one of the outer side surfaces of the back gap 351 and the side gap 352 is inclined outward from top to bottom. This structure ensures that the annular gap 35 accommodates the increasing swing range of the resilience clamping arm 341 from top to bottom; furthermore, it facilitates demolding during molding.

In another embodiment, more than two resilience clamping portions 34 are arranged around the axis of the shaft hole 33. This configuration enables more than two resilience clamping portions 34 to engage with the cover rotation shaft 25 in different directions, thereby ensuring proper engagement.

In another embodiment, two or three resilience clamping portions 34 are evenly distributed around the axis of the shaft hole 33. This configuration enables two or three resilience clamping portions 34 to engage with the cover rotation shaft 25 in evenly distributed directions, thereby ensuring balanced engagement.

In another embodiment, the distance between the ends of the arm clamping blocks 342 of each resilience clamping portion 34 is less than the outer diameter of the lower limiting ring 253. This structure enables the lower limiting ring 253 and each arm clamping block 342 to have an overlapping region, ensuring that the lower limiting ring 253 can be locked at the lower end of the arm clamping block 342.

In another embodiment, the distance between the ends of the arm clamping blocks 342 of each resilience clamping portion 34 is less than the outer diameter of the upper limiting ring 252. This structure enables the upper limiting ring 252 and each arm clamping block 342 to have an overlapping region, ensuring that the upper limiting ring 252 and the arm clamping block 342 provide a locking function.

In another embodiment, the end of the arm clamping block 342 is arc-shaped to cooperate with at least one of the upper neck portion 254 and the lower neck portion 255. This structure enables the arm clamping block 342 to be adapted to and cooperate with the upper neck portion 254 or the lower neck portion 255, ensuring that the cover rotation shaft 25 rotates stably and smoothly, and is not prone to shaking.

In another embodiment, the resilience clamping portion 34 and the shaft body are integrally injection-molded. This structure ensures the strength of the resilience clamping portion 34, reduces costs, and improves efficiency.

In another embodiment, the base comprises a clamping claw 12, and the clamping claw 12 is provided with a claw tooth 122. The rotary cap is provided with a driving tooth 26 and a cover tooth 211 that cooperates with the claw tooth 122; the rope winding shaft is provided with a driven tooth 321 driven by the driving tooth 26. The overlapping area between the claw tooth 122 and the cover tooth 211 in the vertical direction is smaller than the distance required to pull out the rotary cap when releasing the rope. The overlapping region between the driving tooth 26 and the driven tooth 321 in the vertical direction is less than the distance by which the rotary cap is pulled out when releasing the rope. This structure ensures that, when the rotary cap is pulled out to release the rope, the claw tooth 122 and the cover tooth 211 are completely disengaged, and the driving tooth 26 and the driven tooth 321 are also completely disengaged, thereby preventing interference, with both the rope winding shaft and the rotary cap being in a free state.

In another embodiment, the base comprises a clamping claw 12, and the clamping claw 12 is provided with a claw tooth 122. The rotary cap is provided with a driving tooth 26 and a cover tooth 211 that engages with the claw tooth 122. The cover tooth 211 is provided with a tooth surface 2111 that engages and locks with the tooth clamping surface 1221 of the claw tooth 122, and a tooth trailing surface 2112 that cooperates with the tooth trailing surface 1222 of the claw tooth 122. The tooth surface 2111 may cooperate with the corresponding tooth clamping surface 1221 of the claw tooth 122 to abut against each other, thereby ensuring that the clamping claw 12 prevents reverse rotation of the rotary cap. The tooth trailing surface 2112 may cooperate with the corresponding tooth trailing surface 1222 of the claw tooth 122 to generate an inward pressing force on the claw tooth 122 toward the inner circle, allowing the cover tooth 211 to slide over the claw tooth 122 in the same direction, thereby ensuring that the rotary cap can rotate unidirectionally relative to the clamping claw 12.

In another embodiment, the tooth trailing surface 2112 is gradually inclined from the root to the tip of the cover tooth 211 in the rope releasing direction. This structure ensures the smooth relative sliding between the tooth trailing surface 2112 and the tooth trailing surface 1222.

In another embodiment, the plane on which the tooth surface 2111 is arranged passes through the axis of the rope winding shaft. The tooth surface 2111 of this structure can cooperate with the corresponding tooth clamping surface 1221 of the claw tooth 122 to abut and lock, thereby preventing reverse rotation of the rotary cap.

In another embodiment, the plane on which the tooth surface 2111 is arranged gradually inclines toward the rope tightening direction from the tooth root to the tooth tip. The tooth surface 2111 of this structure can cooperate with the corresponding tooth clamping surface 1221 of the claw tooth 122 to abut and lock, which not only prevents reverse rotation of the rotary cap, but also provides the effect that the greater the reverse force on the rotary cap, the tighter the engagement between the tooth surface 2111 and the corresponding tooth clamping surface 1221 of the claw tooth 122, thereby ensuring secure locking.

A shoe, as shown in Figures 1-17, comprises a shoe main body 5 and a rope rotary buckle assembled on the shoe main body 5. During actual use of the present application, the rotary cap, base, and rope winding shaft of the rope rotary buckle cooperate with one another. The various structures of the rotary cap can be directly molded by vertical demolding. The clamping claw 12 is positioned above the rope winding body 31 of the rope winding shaft to provide axial limiting for the rope winding shaft. The clamping claw 12 provides radial limiting for the upper shaft portion 32 of the rope winding shaft located within the inner circle. The tooth wall ring 21 of the rotary cap extends into the outer side of the clamping claw 12 of the base, such that the cover tooth 211 corresponds to and engages with the claw tooth 122, and the driving portion of the rotary cap cooperates with the driven portion of the rope winding shaft. When the user rotates the rotary cap in the rope tightening direction, the driving portion drives the driven portion, causing the rope winding shaft to wind and tighten the rope rotary buckle. The cover tooth 211 slides over the claw tooth 122 accordingly and is positioned by the claw tooth 122 at the corresponding location, thereby preventing the rotary cap from reversing and further preventing the rope winding shaft from reversing. This ensures that the rope winding shaft tightens the rope rotary buckle and maintains it in the desired position. The rope winding shaft is simultaneously axially and radially limited by the clamping claw 12, ensuring stable and smooth rotation of the rope winding shaft, which is not prone to wobbling. The resilience claw arm 121 and the seat surrounding wall 11 are staggered on the toroidal surface, facilitating upper and lower demolding processes. Furthermore, the toroidal surface is positioned further inward than the seat surrounding wall 11, and the integrally formed resilience claw arm 121 can directly provide more secure axial limiting for the rope winding shaft. At the same time, the outward-facing claw tooth 122 and the inward-facing cover tooth 211 can directly cooperate above the rope winding shaft, allowing the cover tooth 211 and the cover side wall 23 to retract further inward. The cover side wall 23 can operate in close proximity to the seat surrounding wall 11, resulting in a compact and stable structure while preventing foreign matter from entering and affecting the operation of the internal mechanism. Additionally, the outer side of the outwardly arched, curved arc-shaped resilience claw arm 121 is reinforced, ensuring the compressive strength of the resilience claw arm 121. Furthermore, the rope winding shaft and the rotary cap axially limit the clamping claw 12 from above and below, preventing the clamping claw 12 from bending or breaking upward or downward due to force, thereby ensuring the mechanism operates durably, stably, and smoothly. By axially pulling out the rotary cap so that the cover tooth 211 disengages from the claw tooth 122, or so that the driving portion disengages from the driven portion, the rotational restriction on the rope winding shaft can be unlocked, thereby achieving anti-loosening of the rope rotary buckle.

An article, as shown in Figures 1-17, comprises an article main body and a rope rotary buckle assembled on the article main body. During actual use of the present application, the rotary cap, base, and rope winding shaft of the rope rotary buckle cooperate with one another. The various structures of the rotary cap can be directly molded by vertical demolding. The clamping claw 12 is positioned above the rope winding body 31 of the rope winding shaft to provide axial limiting for the rope winding shaft. The clamping claw 12 provides radial limiting for the upper shaft portion 32 of the rope winding shaft located within the inner circle. The tooth wall ring 21 of the rotary cap extends into the outer side of the clamping claw 12 of the base, such that the cover tooth 211 corresponds to and engages with the claw tooth 122, and the driving portion of the rotary cap cooperates with the driven portion of the rope winding shaft. When the user rotates the rotary cap in the rope tightening direction, the driving portion drives the driven portion, causing the rope winding shaft to wind and tighten the rope rotary buckle. The cover tooth 211 slides over the claw tooth 122 accordingly and is positioned by the claw tooth 122 at the corresponding location, thereby preventing the rotary cap from reversing and further preventing the rope winding shaft from reversing. This ensures that the rope winding shaft tightens the rope rotary buckle and maintains it in the desired position. The rope winding shaft is simultaneously axially and radially limited by the clamping claw 12, ensuring stable and smooth rotation of the rope winding shaft, which is not prone to wobbling. The resilience claw arm 121 and the seat surrounding wall 11 are staggered on the toroidal surface, facilitating upper and lower demolding processes. Furthermore, the toroidal surface is positioned further inward than the seat surrounding wall 11, and the integrally formed resilience claw arm 121 can directly provide more secure axial limiting for the rope winding shaft. At the same time, the outward-facing claw tooth 122 and the inward-facing cover tooth 211 can directly cooperate above the rope winding shaft, allowing the cover tooth 211 and the cover side wall 23 to retract further inward. The cover side wall 23 can operate in close proximity to the seat surrounding wall 11, resulting in a compact and stable structure while preventing foreign matter from entering and affecting the operation of the internal mechanism. Additionally, the outer side of the outwardly arched, curved arc-shaped resilience claw arm 121 is reinforced, ensuring the compressive strength of the resilience claw arm 121. Furthermore, the rope winding shaft and the rotary cap axially limit the clamping claw 12 from above and below, preventing the clamping claw 12 from bending or breaking upward or downward due to force, thereby ensuring the mechanism operates durably, stably, and smoothly. By axially pulling out the rotary cap so that the cover tooth 211 disengages from the claw tooth 122, or so that the driving portion disengages from the driven portion, the rotational restriction on the rope winding shaft can be unlocked, thereby achieving anti-loosening of the rope rotary buckle.

The product form of the present application is not limited to the drawings and embodiments disclosed herein. Any appropriate modifications or alterations made by those skilled in the art based on similar concepts shall be considered as falling within the scope of the present application.

## Claims

**1.** A rope rotary buckle, comprising: a base; a rotary cap; and a rope winding shaft arranged within the base, wherein the base comprises a base body, the base body comprising a seat surrounding wall, the rotary cap comprises a cover body, the rope winding shaft comprises a shaft body, a direction toward the rotary cap is defined as an upper side, and an opposite direction as a lower side, wherein the rope rotary buckle further comprises clamping claws arranged on the seat surrounding wall, the clamping claw being integrally formed in the region above the lower end of the seat surrounding wall, the clamping claw comprises a resilience claw arm extending in the direction surrounding the axis of the rope winding shaft, and a claw tooth formed on the resilience claw arm and oriented toward an outer circle, the resilience claw arm is outwardly arched in a curved arc shape, and a toroidal surface on which the resilience claw arm is arranged is closer to the axis of the rope winding shaft than a toroidal surface on which the seat surrounding wall is arranged, the cover body comprises a tooth wall ring extending toward the base and corresponding to the clamping claw, a toroidal surface on which the tooth wall ring is arranged is closer to the axis of the rope winding shaft than the toroidal surface on which the seat surrounding wall is arranged, and an inner circle side of the tooth wall ring is formed with cover teeth facing the clamping claw, the shaft body comprises a rope winding body positioned within the inner circle of the seat surrounding wall and corresponding to a position below the clamping claw, and an upper shaft portion extending into the inner circle of the clamping claw, the toroidal surface at the maximum outer diameter of the rope winding body and the upper shaft portion is closer to the axis of the rope winding shaft than the toroidal surface on which the seat surrounding wall is arranged.

**2.** The rope rotary buckle according to claim 1, wherein the toroidal surface on which the resilience claw arm is arranged is at the inner circle of the toroidal surface on which the seat surrounding wall is arranged.

**3.** The rope rotary buckle according to claim 1, wherein a projection of the resilience claw arm on a plane perpendicular to the axis of the rope winding shaft is within the inner circle of a projection of the seat surrounding wall on a plane perpendicular to the axis of the rope winding shaft.

**4.** The rope rotary buckle according to claim 1, wherein an accommodating space for the rope winding shaft is provided between the clamping claw and the lower end of the seat surrounding wall.

**5.** The rope rotary buckle according to claim 1, wherein the clamping claw is formed at an upper portion of the seat surrounding wall.

**6.** The rope rotary buckle according to any one of claims 1 to 5, wherein two or more clamping claws are arranged around the axis of the rope winding shaft, with their free ends oriented in the same direction.

**7.** The rope rotary buckle according to claim 6, wherein two, three, or four clamping claws are evenly arranged around the axis of the rope winding shaft.

**8.** The rope rotary buckle according to claim 6, wherein the claw tooth is formed on at least one of an outer circle side and an end portion of the resilience claw arm.

**9.** The rope rotary buckle according to claim 8, wherein a claw gap is provided between the resilience claw arm and the inner side of the seat surrounding wall.

**10.** The rope rotary buckle according to claim 9, wherein the claw gap has a size for the tooth wall ring and cover teeth of the rotary cap to insert therein.

**11.** The rope rotary buckle according to claim 9, wherein each claw gap forms a bottom ring groove for the tooth wall ring and cover teeth of the rotary cap to insert into and rotate a full circle.

**12.** The rope rotary buckle according to claim 9, wherein the width of the claw gap is greater than the sum of the thickness of the tooth wall ring of the rotary cap and the tooth height of the cover tooth.

**13.** The rope rotary buckle according to claim 9, wherein the resilience claw arm comprises a claw free end capable of swinging inwardly and outwardly, and a claw root connected to the inner side of the seat surrounding wall.

**14.** The rope rotary buckle according to claim 13, wherein the claw root is connected to the inner side of the seat surrounding wall via a root connecting portion.

**15.** The rope rotary buckle according to claim 14, wherein the root connecting portion is connected to a lower part of the resilience claw arm.

**16.** The rope rotary buckle according to claim 14, wherein the claw tooth is at least partially higher than the root connecting portion.

**17.** The rope rotary buckle according to claim 16, wherein the claw tooth is entirely higher than the root connecting portion.

**18.** The rope rotary buckle according to claim 14, wherein the resilience claw arm is at least partially higher than the root connecting portion.

**19.** The rope rotary buckle according to claim 18, wherein the resilience claw arm is entirely higher than the root connecting portion.

**20.** The rope rotary buckle according to claim 14, wherein at least one of the claw root and the root connecting portion has a root protrusion extending toward the inner circle.

**21.** The rope rotary buckle according to claim 20, wherein the height of the root protrusion extending toward the inner circle is greater than or equal to the tooth height of the claw tooth.

**22.** The rope rotary buckle according to claim 21, wherein the root protrusion of each clamping claw forms a radial limiting space for the upper shaft portion of the rope winding shaft to extend into.

**23.** The rope rotary buckle according to claim 14, wherein a distance from the resilience claw arm to the upper shaft portion of the rope winding shaft is greater than or equal to the tooth height of the claw tooth.

**24.** The rope rotary buckle according to claim 14, wherein the root connecting portion gradually widens from the claw root to the inner side of the seat surrounding wall.

**25.** The rope rotary buckle according to claim 14, wherein limiting protrusions are formed on the inner side of the seat surrounding wall.

**26.** The rope rotary buckle according to claim 25, wherein the limiting protrusion corresponds to the resilience claw arm.

**27.** The rope rotary buckle according to claim 26, wherein an upper surface of the limiting protrusion is flush with an upper surface of the root connecting portion.

**28.** The rope rotary buckle according to claim 26, wherein a lower surface of the limiting protrusion is flush with a lower surface of the root connecting portion.

**29.** The rope rotary buckle according to claim 26, wherein the limiting protrusion extends along the axis surrounding the rope winding shaft.

**30.** The rope rotary buckle according to claim 26, wherein the limiting protrusion is lower than at least one of the upper surfaces of the resilience claw arm and the claw tooth.

**31.** The rope rotary buckle according to claim 30, wherein the limiting protrusion is lower than at least one of the resilience claw arm and the claw tooth.

**32.** The rope rotary buckle according to claim 25, wherein a formed through opening is provided between the limiting protrusion and the adjacent root connecting portion.

**33.** The rope rotary buckle according to claim 32, wherein the formed through opening vertically corresponds to at least one of a wall clamping portion and the claw tooth.

**34.** The rope rotary buckle according to claim 14, wherein a wall clamping portion for clamping the rope winding shaft is formed at a lower part of the seat surrounding wall.

**35.** The rope rotary buckle according to claim 34, wherein the wall clamping portion is a step protruding in the direction of the axis of the rope winding shaft.

**36.** The rope rotary buckle according to claim 35, wherein an axial limiting space for restricting the rope winding shaft in the vertical direction is formed between the wall clamping portion and the root connecting portion.

**37.** The rope rotary buckle according to claim 35, wherein an inclined surface for the rope winding shaft to be clamped in is formed at a lower part of the wall clamping portion.

**38.** The rope rotary buckle according to claim 35, wherein the seat surrounding wall is provided with a resilience bearing arm capable of swinging inwardly and outwardly, and the wall clamping portion is formed on the inner side of the resilience bearing arm.

**39.** The rope rotary buckle according to claim 38, wherein a gap is formed between the resilience bearing arm and the main body portion of the seat surrounding wall.

**40.** The rope rotary buckle according to claim 14, wherein the upper end of the seat surrounding wall is provided with an upper extending wall that is higher than the root connecting portion.

**41.** The rope rotary buckle according to claim 40, wherein the upper extending wall is higher than the resilience claw arm.

**42.** The rope rotary buckle according to claim 40, wherein the upper extending wall comprises a wall insertion section that extends into the cover ring groove.

**43.** The rope rotary buckle according to claim 42, wherein the maximum depth of the wall insertion section extending into the cover ring groove is greater than the distance required to pull out the rotary cap when releasing the rope.

**44.** The rope rotary buckle according to claim 14, wherein the resilience claw arm is provided with a downwardly extending arm protrusion.

**45.** The rope rotary buckle according to claim 44, wherein the arm protrusion is formed on the lower surface of the resilience claw arm and extends toward the rope winding body of the rope winding shaft.

**46.** The rope rotary buckle according to claim 45, wherein a lower end of the arm protrusion is higher than, or flush with, a lower surface of the root connecting portion.

**47.** The rope rotary buckle according to claim 45, wherein the protrusion height of the arm protrusion is less than or equal to the thickness of the root connecting portion or the limiting protrusion.

**48.** The rope rotary buckle according to claim 45, wherein the arm protrusion is formed at at least one location between the two ends of the resilience claw arm and the claw free end.

**49.** The rope rotary buckle according to claim 45, wherein the distance between the arm protrusion and the upper shaft portion of the rope winding shaft is greater than or equal to the tooth height of the claw tooth.

**50.** The rope rotary buckle according to claim 14, wherein the distances from each point on the outer circle side of the resilience claw arm to the seat surrounding wall are equal, or gradually approach the seat surrounding wall from the claw root to the claw free end.

**51.** The rope rotary buckle according to claim 14, wherein the distance from the resilience claw arm to the seat surrounding wall is equal, or gradually approach the seat surrounding wall from the claw root to the claw free end.

**52.** The rope rotary buckle according to claim 14, wherein the claw teeth are formed on the outer circle side of the claw free end.

**53.** The rope rotary buckle according to claim 52, wherein a tooth wall gap is provided between the claw teeth and the inner side of the seat surrounding wall.

**54.** The rope rotary buckle according to claim 6, wherein the resilience claw arm gradually extends from the claw root to the claw free end in a rope tightening direction.

**55.** The rope rotary buckle according to claim 54, wherein the claw tooth comprises a tooth root and a tooth tip, and the claw tooth is gradually inclined from the tooth root to the tooth tip in the rope tightening direction.

**56.** The rope rotary buckle according to claim 54, wherein the claw tooth comprises a tooth root and a tooth tip, and the claw tooth comprises a tooth clamping surface oriented toward the rope tightening direction and a tooth trailing surface oriented toward a rope releasing direction, the tooth trailing surface being gradually inclined toward the rope tightening direction from the tooth root to the tooth tip.

**57.** The rope rotary buckle according to claim 56, wherein the plane on which the tooth clamping surface is located passes through the axis of the rope winding shaft or is gradually inclined toward the rope tightening direction from the tooth root to the tooth tip.

**58.** The rope rotary buckle according to claim 54, wherein more than two claw teeth are provided on the outer circle side of the same resilience claw arm.

**59.** The rope rotary buckle according to any one of claims 1-5, wherein the seat surrounding wall comprises a seat extension wall extending into an accommodating space of a connection seat, and a rope-passing portion corresponding to a corresponding wall of the connection seat.

**60.** The rope rotary buckle according to claim 59, wherein the seat surrounding wall is formed with a rope-through portion opposite to the rope-passing portion.

**61.** The rope rotary buckle according to claim 60, wherein the rope-passing portion and the rope-through portion correspond to each other and are arranged on both sides of the rope winding shaft.

**62.** The rope rotary buckle according to claim 61, wherein the rope-through portion comprises a rope-through hole formed in a side wall of the rope rotary buckle.

**63.** The rope rotary buckle according to claim 62, wherein the rope-through hole has a size for a clamping head of the rope rotary buckle to pass through.

**64.** The rope rotary buckle according to claim 60, wherein a convex ring is formed on the outer circumferential surface of the seat surrounding wall.

**65.** The rope rotary buckle according to claim 64, wherein the convex ring is at least as high as the rope-passing portion and/or the rope-through portion.

**66.** The rope rotary buckle according to claim 65, wherein the rope-passing portion is formed on the convex ring.

**67.** The rope rotary buckle according to claim 64, wherein at least one of the upper surface and the lower surface of the convex ring is planar.

**68.** The rope rotary buckle according to claim 64, wherein the convex ring is formed with a ring notch corresponding to the rope-through portion.

**69.** The rope rotary buckle according to any one of claims 1-5, wherein the extent to which the tooth wall ring extends into the bottom ring groove of the base is less than the distance required to pull out the rotary cap when releasing the rope.

**70.** The rope rotary buckle according to any one of claims 1-5, wherein the cover body comprises a cover top wall and a cover side wall.

**71.** The rope rotary buckle according to claim 70, wherein the toroidal surface on which the tooth wall ring is arranged is at the inner circle of the toroidal surface on which the seat surrounding wall is arranged, and the tooth wall ring is formed on the inner side surface of the cover top wall.

**72.** The rope rotary buckle according to claim 71, wherein the distance from the cover tooth root to the axis of the rope winding shaft is less than or equal to the distance from the claw tooth tip to the axis of the rope winding shaft.

**73.** The rope rotary buckle according to claim 70, wherein a cover gap is provided between the tooth wall ring and the cover side wall.

**74.** The rope rotary buckle according to claim 71, wherein a cover ring groove for limiting insertion of the wall insertion section is formed between the tooth wall ring and the cover side wall.

**75.** The rope rotary buckle according to claim 74, wherein the depth of the cover ring groove is greater than the distance required to pull out the rotary cap when releasing the rope.

**76.** The rope rotary buckle according to claim 74, wherein the cover ring groove comprises an inner circle groove wall corresponding to the inner circle side of the wall insertion section, and an outer circle groove wall corresponding to the outer circle side of the wall insertion section, the inner circle groove wall is parallel to the inner circle side of the wall insertion section, and the outer circle groove wall is parallel to the outer circle side of the wall insertion section.

**77.** The rotary cap according to claim 76, wherein the outer circle groove wall extends to the lower end of the cover side wall.

**78.** The rope rotary buckle according to any one of claims 70-77, wherein a cover rotation shaft extending downward into an axial hole of the rope winding shaft is provided at a rotation axis of the cover top wall.

**79.** The rope rotary buckle according to claim 78, wherein the cover rotation shaft comprises a rotation shaft body at the upper portion and a limiting ring at the lower portion.

**80.** The rope rotary buckle according to claim 79, wherein the limiting ring comprises an upper limiting ring disposed above, and a lower limiting ring disposed below.

**81.** The rope rotary buckle according to claim 80, wherein the diameter of the upper limiting ring is less than the diameter of the lower limiting ring.

**82.** The rope rotary buckle according to claim 81, wherein the diameter of the upper limiting ring is less than the diameter of the rotation shaft body.

**83.** The rope rotary buckle according to claim 81, wherein the diameter of the lower limiting ring is less than or equal to the diameter of the rotation shaft body.

**84.** The rope rotary buckle according to claim 80, wherein an upper neck portion is formed between the upper limiting ring and the cover rotation shaft.

**85.** The rope rotary buckle according to claim 84, wherein a lower neck portion is formed between the lower limiting ring and the upper limiting ring.

**86.** The rope rotary buckle according to claim 80, wherein the edge of the upper limiting ring is provided with an overrunning inclined surface along which an arm clamping block of the rope winding shaft slides.

**87.** The rope rotary buckle according to claim 80, wherein the lower limiting ring is provided with a ring anti-detachment clamping surface facing upward and clamping the arm clamping block.

**88.** The rope rotary buckle according to claim 87, wherein the ring anti-detachment clamping surface is a plane perpendicular to the axis of the cover rotation shaft.

**99.** The rope rotary buckle according to claim 87, wherein a lower end of the lower limiting ring is provided with an annular inclined surface, the annular inclined surface being inclined downward toward the axis of the cover rotation shaft from top to bottom.

**90.** The rope rotary buckle according to claim 80, wherein both the upper limiting ring and the lower limiting ring are complete rings.

**91.** The rope rotary buckle according to claim 78, wherein a rotation shaft hole is formed inside the cover rotation shaft.

**92.** The rope rotary buckle according to claim 91, wherein the rotation shaft hole is formed at the lower end of the cover rotation shaft, and its length is less than or equal to the length of the cover rotation shaft.

**93.** The rope rotary buckle according to claim 78, wherein the cover body is provided with a driving portion for driving the rope winding shaft to rotate.

**94.** The rope rotary buckle according to claim 93, wherein the driving portion is driving teeth formed on at least one of the cover top wall and the cover rotation shaft.

**95.** The rope rotary buckle according to claim 94, wherein the driving teeth comprise a plurality of tooth units uniformly arranged around the cover rotation shaft.

**96.** The rope rotary buckle according to claim 95, wherein each tooth unit has a driving tooth surface facing the rope tightening direction and a driving tooth reverse surface facing the rope releasing direction; the driving tooth reverse surface is an inclined surface that gradually inclines from top to bottom toward the rope tightening direction.

**97.** The rope rotary buckle according to claim 96, wherein the driving tooth surface extends from top to bottom along the axis of the rope winding shaft or is an inclined surface that gradually inclines from top to bottom in the rope tightening direction.

**98.** The rope rotary buckle according to claim 95, wherein the driving tooth is positioned within the inner circle of the cover tooth, and an accommodating gap for accommodating the clamping claw is provided between the driving teeth and the cover teeth.

**99.** The rope rotary buckle according to claim 98, wherein the distance between the driving tooth and the cover tooth is greater than the sum of the radial thickness of the resilience claw arm and the tooth height of the claw tooth.

**100.** The rope rotary buckle according to claim 94, wherein the driving tooth is formed on the inner surface of the cover top wall and a rotation shaft gap is provided between the driving tooth and the cover rotation shaft.

**101.** The rope rotary buckle according to claim 100, wherein the rotation shaft gap is dimensioned to accommodate an upper shaft inner wall of the rope winding shaft.

**102.** The rope rotary buckle according to claim 77, wherein an annular protrusion corresponding to the cover ring groove is formed at the edge of the upper surface of the cover top wall.

**103.** The rope rotary buckle according to claim 93, wherein the cover body, tooth wall ring, cover teeth, cover rotation shaft, and driving portion are integrally injection molded.

**104.** The rope rotary buckle according to any one of claims 1-5, wherein the rope winding body comprises a shaft upper wall disposed below the clamping claw, a shaft lower wall disposed below the shaft upper wall, and a rope winding main body connected between the shaft upper wall and the shaft lower wall; the diameter of the rope winding main body is less than the diameters of the shaft upper wall and the shaft lower wall.

**105.** The rope rotary buckle according to claim 104, wherein an edge of the shaft upper wall is formed with a wall notch for passage of the wall clamping portion.

**106.** The rope rotary buckle according to claim 104, wherein the upper shaft portion comprises a driven portion corresponding to the driving portion and configured to be driven.

**107.** The rope rotary buckle according to claim 106, wherein the driven portion is driven teeth corresponding to the driving teeth.

**108.** The rope rotary buckle according to claim 107, wherein the driven tooth comprises a plurality of tooth units uniformly arranged around the axis of the rope winding shaft.

**109.** The rope rotary buckle according to claim 108, wherein the tooth unit has a driven surface facing the rope releasing direction and a driven reverse surface facing the rope tightening direction; the driven reverse surface is an inclined surface that gradually inclines from top to bottom toward the rope tightening direction.

**110.** The rope rotary buckle according to claim 109, wherein the driven surface extends from top to bottom along the axis of the rope winding shaft or is an inclined surface that gradually inclines toward the rope tightening direction from top to bottom.

**111.** The rope rotary buckle according to claim 107, wherein the upper shaft portion comprises an upper shaft outer wall located at the outer circle of the driven tooth and corresponding to the clamping claw.

**112.** The rope rotary buckle according to claim 107, wherein the upper shaft portion comprises an upper shaft inner wall located at the inner circle of driven teeth and corresponding to the cover rotation shaft.

**113.** The rope rotary buckle according to claim 104, wherein the shaft body is formed with a shaft hole for the cover rotation shaft to extend into.

**114.** The rope rotary buckle according to claim 113, wherein the shaft hole penetrates the shaft body along the axis of the shaft body from top to bottom.

**115.** The rope rotary buckle according to claim 113, wherein the upper or lower part of the shaft hole is a circular hole for radial limiting, configured to cooperate with the circumferential surface of the cover rotation shaft.

**116.** The rope rotary buckle according to claim 114, wherein it further comprises a resilience clamping portion disposed at the shaft hole and configured to cooperate with the cover rotation shaft.

**117.** The rope rotary buckle according to claim 116, wherein the resilience clamping portion comprises a resilience clamping arm disposed on the shaft hole wall, and an arm clamping block disposed at the free end of the resilience clamping arm and configured to cooperate with the limiting ring.

**118.** The rope rotary buckle according to claim 117, wherein the arm clamping block protrudes into the region of the shaft hole.

**119.** The rope rotary buckle according to claim 117, wherein the edge of the arm clamping block is provided with an overrunning inclined surface along which the upper limiting ring slides.

**120.** The rope rotary buckle according to claim 117, wherein the arm clamping block is provided with an arm anti-detachment clamping surface facing downward and configured to be clamped by the ring anti-detachment clamping surface.

**121.** The rope rotary buckle according to claim 120, wherein the arm anti-detachment clamping surface is a plane perpendicular to the axis of the cover rotation shaft, or is inclined downward from the outer circle to the inner circle.

**122.** The rope rotary buckle according to claim 120, wherein the resilience clamping arm comprises an arm root connected to the shaft hole wall and an arm free end bearing the arm clamping block; the resilience clamping arm extends gradually downward from the arm root to the arm free end.

**123.** The rope rotary buckle according to claim 122, wherein the cross-sectional area of the resilience clamping arm gradually increases from bottom to top.

**124.** The rope rotary buckle according to claim 122, wherein the resilience clamping arm comprises an arm inner side surface facing the shaft hole, an arm outer side surface facing in an opposite direction, and two arm side surfaces disposed between the arm inner side surface and the arm outer side surface.

**125.** The rope rotary buckle according to claim 124, wherein the distance between the arm inner side surface and the arm outer side surface gradually increases from bottom to top.

**126.** The rope rotary buckle according to claim 124, wherein the distance between both arm side surfaces gradually increases from bottom to top.

**127.** The rope rotary buckle according to claim 124, wherein the arm inner side surface and the inner wall of the shaft hole are located on the same circular pivot surface or are gradually inclined toward the axis of the shaft hole from top to bottom.

**128.** The rope rotary buckle according to claim 124, wherein the arm outer side surface is parallel to the axis of the shaft hole or is gradually inclined toward the axis of the shaft hole from top to bottom.

**129.** The rope rotary buckle according to claim 117, wherein the cross-section of the resilience clamping arm is an arc shape surrounding the axis of the shaft hole.

**130.** The rope rotary buckle according to claim 122, wherein at least one of the lower end face of the resilience clamping arm and the arm anti-detachment clamping surface is provided with an toggle portion for toggling.

**131.** The rope rotary buckle according to claim 130, wherein the toggle portion is a protrusion or a groove.

**132.** The rope rotary buckle according to claim 131, wherein the toggle portion is a bar-shaped protrusion disposed between both arm side surfaces and extending toward both arm side surfaces.

**133.** The rope rotary buckle according to claim 117, wherein the shaft body is formed with an annular gap surrounding the resilience clamping arm.

**134.** The rope rotary buckle according to claim 133, wherein the annular gap is of uniform width from top to bottom or gradually increases in width.

**135.** The rope rotary buckle according to claim 133, wherein the annular gap comprises a back gap corresponding to the arm outer side surface and side gap corresponding to both arm side surfaces.

**136.** The rope rotary buckle according to claim 135, wherein at least the width of the lower end of the back gap is greater than the buckling depth of the upper limiting ring and the arm clamping block.

**137.** The rope rotary buckle according to claim 135, wherein at least the width of the lower end of the back gap is greater than the buckling depth of the lower limiting ring and the arm clamping block.

**138.** The rope rotary buckle according to claim 135, wherein at least one of the outer surfaces of the back gap and the side gap is inclined outward from top to bottom.

**139.** The rope rotary buckle according to claim 117, wherein more than two resilience clamping portions are arranged around the axis of the shaft hole.

**140.** The rope rotary buckle according to claim 139, wherein two or three resilience clamping portions are evenly arranged around the axis of the shaft hole.

**141.** The rope rotary buckle according to claim 139, wherein the distance between the ends of the arm clamping blocks of each resilience clamping portion is less than the outer diameter of the lower limiting ring.

**142.** The rope rotary buckle according to claim 141, wherein the distance between the ends of the arm clamping blocks of each resilience clamping portion is less than the outer diameter of the upper limiting ring.

**143.** The rope rotary buckle according to claim 141, wherein the end of the arm clamping block is an arc shape and is configured to mate with at least one of the upper neck portion and the lower neck portion.

**144.** The rope rotary buckle according to claim 116, wherein the resilience clamping portion and the shaft body are integrally injection molded.

**145.** The rope rotary buckle according to any one of claims 1-5, wherein the base comprises clamping claws, the clamping claw having claw teeth; the rotary cap has driving teeth and cover teeth configured to mate with the claw teeth; and the rope winding shaft has driven teeth configured to be driven by the driving teeth, the overlapping region between the claw teeth and the cover teeth in the vertical direction is less than the distance required to pull out the rotary cap when releasing the rope, the overlapping region between the driving teeth and the driven teeth in the vertical direction is less than the distance required to pull out the rotary cap when releasing the rope.

**146.** The rope rotary buckle according to any one of claims 1-5, wherein the base comprises clamping claws, the clamping claw having claw teeth; the rotary cap has driving teeth and cover teeth configured to mate with the claw teeth, the cover tooth is provided with a tooth surface that engages and locks with the tooth clamping surface of the claw tooth, and a tooth trailing surface that is matched with the tooth trailing surface of the claw tooth.

**147.** The rope rotary buckle according to claim 146, wherein the tooth trailing surface inclines gradually from the root to the tip of the cover tooth in the rope releasing direction.

**148.** The rope rotary buckle according to claim 146, wherein the plane on which the tooth clamping surface is arranged passes through the axis of the rope winding shaft or inclines gradually from the tooth root to the tooth tip in the rope tightening direction.

**149.** A shoe using the rope rotary buckle according to any one of claims 1-148, comprising a shoe main body and a rope rotary buckle assembled on the shoe main body.

**150.** An article using the rope rotary buckle according to any one of claims 1-148, comprising an article main body and a rope rotary buckle assembled on the article main body.
